# EUROPEAN PATENT SPECIFICATION

(11) **EP 2 479 395 B1**
(45) Date of publication and mention of the grant of the patent: **25.02.2015**
(21) Application number: 12150441.9
(22) Date of filing: 09.01.2012
(51) Int. Cl.: F01N 3/20, F01N 3/28

(54) **Electrically heated exhaust gas purifying apparatus and holding sealing material**
Elektrisch beheizte Abgasreinigungsvorrichtung und Halteabdichtungsmaterial
Appareil de purification de gaz d'échappement à chauffage électrique et matériau de fixation

(30) Priority: 20.01.2011 JP 2011010167
(43) Date of publication of application: 25.07.2012
(73) Proprietor: Ibiden Co., Ltd., Ogaki-shi Gifu 503-8604 (JP)
(72) Inventor: Ando, Hisashi, Aichi, 444-1301 (JP); Mutsuda, Fumiyuki, Gifu, 501-0695 (JP); Okabe, Takahiko, Aichi, 444-1301 (JP)
(74) Representative: Hoffmann Eitle

(56) References cited:
- EP-A1- 1 495 807
- WO-A1-2008/154078
- WO-A1-2010/109304
- JP-A- 5 269 387

## Description

### TECHNICAL FIELD

The present invention relates to a holding sealing material, and an electrically heating exhaust gas purifying apparatus.

### BACKGROUND ART

Conventionally, a nonwoven fabric-like holding sealing material including inorganic fibers such as silica fibers or alumina fibers has been known as a constituent member of an exhaust gas purifying apparatus.

The nonwoven fabric-like shape holding sealing material has a prescribed repulsive force and is arranged between a column-like exhaust gas-treating body and a cylindrical metal casing for housing the column-like exhaust gas-treating body in a compressed state.
In the exhaust gas purifying apparatus, the exhaust gas-treating body is thus firmly held at a prescribed position in the metal casing by the nonwoven fabric-like holding sealing material.
Additionally, since the nonwoven fabric-like holding sealing material is arranged between the exhaust gas-treating body and the metal casing, the exhaust gas-treating body is hardly brought into contact with the metal casing even if vibration or the like is applied to the exhaust gas purifying apparatus at the time of use.
The nonwoven fabric-like holding sealing material can also make exhaust gas hardly leak from between the exhaust gas-treating body and the metal casing.

Each of Patent Documents 1 and 2 discloses an electrically heating exhaust gas purifying apparatus as an exhaust gas purifying apparatus using the conventional nonwoven fabric-like holding sealing material as described above.

In the electrically heating exhaust gas purifying apparatus of each of Patent Documents 1 and 2, it is disclosed that electrode parts are connected to an exhaust gas-treating body made of a resistance heating body and the exhaust gas-treating body can be rapidly heated by applying electricity via the electrode parts.

It is accordingly disclosed that even if exhaust gas is in a low temperature state immediately after starting of an engine, the temperature of the exhaust gas-treating body is increased rapidly to the catalytic activation temperature by electricity application and therefore, harmful gas or the like can be efficiently removed.

Patent Document 1: JP-A 5-269387
Patent Document 2: JP-A 6-81638

Two other documents discuss background art: EP 1 495 807 discloses a multilayer mounting mat for mounting a pollution controlling monolithic structure such as a catalytic converter in a housing. The mounting mat comprises a layer of intumescent material positioned between two non-intumescent inorganic fiber layers. A pollution control device comprising a pollution controlling monolithic structure arranged in a metallic casing with the mounting mat disposed between the metallic casing and the pollution controlling monolithic structure is also disclosed. WO 2010/109304 describes a hybrid vehicle control device and method of controlling a hybrid vehicle. The control device includes an electrically heated catalyst.

### SUMMARY OF THE INVENTION

### PROBLEMS TO BE SOLVED BY THE INVENTION

The conventional nonwoven fabric-like holding sealing material constituting the conventional electrically heating exhaust gas purifying apparatus disclosed in each of Patent Documents 1 and 2 has a function of assuring insulating properties between the electrode parts and the metal casing and between the metal casing and the exhaust gas-treating body to which electricity is applied via the electrode parts, other than the function of holding the exhaust gas-treating body.

Herein, it is supposed that when exhaust gas generated by operation of an engine is introduced into an electrically heating exhaust gas purifying apparatus, steam contained in the exhaust gas is condensed because of contact of the exhaust gas with a conventional nonwoven fabric-like holding sealing material at a lower temperature.
It is also supposed that steam contained in the exhaust gas is condensed by cooling of the electrically heating exhaust gas purifying apparatus due to ceasing of the operation of an engine.
It is therefore supposed that condensed water derived from steam mainly contained in the exhaust gas is generated in the inside of the electrically heating exhaust gas purifying apparatus.

However, the conventional holding sealing material is like a nonwoven fabric and has a structure easy to adsorb water or the like. The conventional holding sealing material is therefore supposed to easily absorb the condensed water generated in the inside of the electrically heating exhaust gas purifying apparatus.
The conventional holding sealing material which absorbs the condensed water is thus supposed to have significantly lowered insulating properties.
Therefore, when electricity is applied to the exhaust gas-treating body in the state where the conventional nonwoven fabric-like holding sealing material absorbs water, the insulating properties of the conventional holding sealing material between the electrode parts and the metal casing and between the exhaust gas-treating body and the metal casing cannot be maintained and thus an electric leakage is supposed to occur. As a result, in the case where the conventional holding sealing material is used in an electrically heating exhaust gas purifying apparatus, there is a problem that an electric leakage tends to occur in the exhaust gas purifying apparatus.

### MEANS FOR SOLVING THE PROBLEMS

The present inventors have made intensive investigations to solve the problems and consequently have found that the use of a water-proof insulation sheet as a constituent material for a holding sealing material makes it possible to assure the insulating properties between the electrode parts and the metal casing and between the metal casing and the exhaust gas-treating body to which electricity is applied via the electrode parts even at the time of using an electrically heating exhaust gas purifying apparatus and the electric leakage of the exhaust gas purifying apparatus can be prevented.
Based on the findings, the present inventors have made further investigations and as a result, the inventors have completed the holding sealing material of the present invention capable of solving the problems.

That is, the holding sealing material disclosed in claim 1 includes an inorganic fiber sheet in which inorganic fibers are interlaced with one another, and a water-proof insulation sheet containing a flaky inorganic material.

In the case where the holding sealing material disclosed in claim 1 is used in an electrically heating exhaust gas purifying apparatus, even when condensed water is generated by introducing exhaust gas into the electrically heating exhaust gas purifying apparatus and condensing steam contained in the exhaust gas or even when condensed water is generated by cooling the electrically heating exhaust gas purifying apparatus, the condensed water does not penetrate the water-proof insulation sheet having water-proofness. For this reason, since the condensed water is thus shut out by the water-proof insulation sheet, the holding sealing material as a whole is prevented from complete water absorption.
Consequently, since the insulating properties are kept by the holding sealing material between the electrode parts and the metal casing and between the metal casing and the exhaust gas-treating body to which electricity is applied via the electrode parts, the exhaust gas purifying apparatus hardly causes an electric leakage and is provided with improved safety even if electricity is applied to the exhaust gas-treating body.

In the holding sealing material of the present invention, the water-proof insulation sheet contains flaky inorganic material. The flaky inorganic material contains an inorganic material laminated in layers and the inorganic material can shift between layers and is thus excellent in flexibility.
The holding sealing material is, therefore, easy to be wound onto the outer circumferential surface of an exhaust gas-treating body having a column-like prescribed shape and excellent in handling properties.

In the holding sealing material disclosed in claim 2, the flaky inorganic material is one or more kinds of materials selected from the group consisting of mica, vermiculite, montmorillonite, iron-montmorillonite, beidellite, saponite, hectorite, stevensite, nontronite, magadiite, ilerite, kanemite, smectite, and layered titanate.
In the holding sealing material disclosed in claim 3, the flaky inorganic material is mica.
The flaky inorganic material is a clay inorganic material and is not a metal material and is therefore suitable as a material excellent in insulating properties. It is an inorganic material, has high heat resistance and is suitable for use in arrangement in an electrically heating exhaust gas purifying apparatus to be heated to high temperature.
Mica is excellent in water-proofness and exhibits high electrically insulating properties even in high humidity and therefore is particularly suitable.

In the holding sealing material disclosed in claim 4, the water-proof insulation sheet includes an adhesive.
In the holding sealing material disclosed in claim 4, the water-proof insulation sheet contains an adhesive and the flaky inorganic materials are firmly bonded one another without deteriorating flexibility. For this reason, the water-proof insulation sheet is provided with high strength and accordingly the holding sealing material is provided with high strength. Since the flaky inorganic materials can be bonded densely to one another, the water-proofness is thus improved and good insulating properties can be maintained even in the environment where condensed water is generated.
In the holding sealing material disclosed in claim 5, the adhesive includes one or more kinds of materials selected from the group consisting of silicones, polyethylene glycols, polyalkylene glycols, phosphoric acid esters, alkylbenzene, poly-α-olefins, polyol esters, alkylnaphthalene, halocarbons, polyallyl alkanes, polyphenyls, silicic acid esters, and polyphenyl ethers.
In the holding sealing material disclosed in claim 6, the adhesive is silicone.

In the holding sealing material disclosed in claim 7, the inorganic fiber sheet includes a first inorganic fiber sheet and a second inorganic fiber sheet and the water-proof insulation sheet is sandwiched between the first inorganic fiber sheet and the second inorganic fiber sheet.
In the case where the holding sealing material disclosed in claim 7 is used in an electrically heating exhaust gas purifying apparatus, the first inorganic fiber sheet of the holding sealing material may be arranged in the metal casing side and the second inorganic fiber sheet may be arranged in the exhaust gas-treating body side.
In the electrically heating exhaust gas purifying apparatus having such a configuration, the first inorganic fiber sheet, which is like a nonwoven fabric and has impact absorption, is in contact with the metal casing and the water-proof insulation sheet is not in direct contact with the metal casing, so that the water-proof insulation sheet is hardly broken even if impact such as vibration is applied to the metal casing from the outside. Even if the exhaust gas-treating body is heated to high temperature by exhaust gas flow, the second inorganic fiber sheet excellent in heat resistance is in contact with the exhaust gas-treating body and the water-proof insulation sheet is not in direct contact with the exhaust gas-treating body, so that melting loss of the water-proof insulation sheet is hardly caused.

In the holding sealing material disclosed in claim 8, the inorganic fiber sheet and the water-proof insulation sheet are bonded by an inorganic adhesive.
In the holding sealing material disclosed in claim 8, the inorganic fiber sheet and the water-proof insulation sheet are hardly separated and in the production of the electrically heating exhaust gas purifying apparatus, the holding sealing material is excellent in handling properties.

In the holding sealing material disclosed in claim 9, the inorganic fibers are at least one kind of inorganic fibers selected from the group consisting of alumina fibers, alumina-silica fibers, silica fibers, biosoluble fibers, and glass fibers.
In the holding sealing material disclosed in claim 9, since these inorganic fibers are excellent in characteristics such as heat resistance and repulsive force, the holding sealing material including these inorganic fibers is excellent in heat resistance, repulsive force, and the like.
Further, in the case where the inorganic fibers constituting the holding sealing material contain biosoluble fibers, even if the biosoluble fibers are scattered and taken in a living body at the time of handling the holding sealing material, the biosoluble fibers are dissolved and discharged out of the living body and thus the holding sealing material is excellent in safety for human body.

The holding sealing material disclosed in claim 10 further includes an organic binder.

In the holding sealing material disclosed in claim 10 further including an organic binder, the inorganic fibers are bonded one another by the organic binder and compressed. When the holding sealing material is used in an electrically heating exhaust gas purifying apparatus, at the time of use of the electrically heating exhaust gas purifying apparatus, the organic binder is decomposed by the heat of the high temperature exhaust gas and the inorganic fibers are released from adhesion and the holding sealing material is expanded so that the holding sealing material can exhibit high holding force.

The holding sealing material disclosed in claim 11 further includes an expanding material.

In the holding sealing material disclosed in claim 11 including an expanding material, the expanding material is expanded by the heat of the high temperature exhaust gas at the time of use of the electrically heating exhaust gas purifying apparatus so that the holding sealing material can exhibit high holding force.

The electrically heating exhaust gas purifying apparatus disclosed in claim 1 is an electrically heating exhaust gas purifying apparatus including:
an exhaust gas-treating body made of a resistance heating body;
a metal casing for housing the exhaust gas-treating body; and
a holding sealing material arranged between the exhaust gas-treating body and the metal casing to hold the exhaust gas-treating body, the exhaust gas purifying apparatus further including:
   a first electrode penetrating through the metal casing and the holding sealing material and having a first end part bonded to the exhaust gas-treating body and a second end part exposed outside of the metal casing, and
   a second electrode penetrating through the metal casing and the holding sealing material and having a first end part bonded to the exhaust gas-treating body and a second end part exposed outside of the metal casing, and wherein
   the holding sealing material comprises: an inorganic fiber sheet in which inorganic fibers are interlaced with one another, and a water-proof insulation sheet containing a flaky inorganic material.

In the electrically heating exhaust gas purifying apparatus disclosed in claim 1, since the holding sealing material of the present invention excellent in water-proofness is used, the entire of the holding sealing material is prevented from complete water absorption even if condensed water is generated in the inside of the electrically heating exhaust gas purifying apparatus.

Consequently, at the time of use of the electrically heating exhaust gas purifying apparatus, since the insulating properties are kept by the holding sealing material between the electrode parts and the metal casing and between the metal casing and the exhaust gas-treating body to which electricity is applied via the electrode parts, the exhaust gas purifying apparatus hardly causes an electric leakage and is provided with improved safety even if electricity is applied to the exhaust gas-treating body.

### BRIEF DESCRIPTION OF THE DRAWINGS

Fig. 1A is a perspective view schematically showing one example of the holding sealing material of the present invention;
Fig. 1B is an A-A line cross-sectional view of the holding sealing material of the present invention shown in Fig. 1A;
Fig. 2A is a perspective view schematically showing an electrically heating exhaust gas purifying apparatus in the first embodiment of the present invention;
Fig. 2B is a B-B line cross-sectional view of the electrically heating exhaust gas purifying apparatus in the first embodiment of the present invention shown in Fig. 2A;
Fig. 3A is a perspective view schematically showing an exhaust gas-treating body constituting the electrically heating exhaust gas purifying apparatus in the first embodiment of the present invention shown in Fig. 2A;
Fig. 3B is a perspective view schematically showing a metal casing constituting the electrically heating exhaust gas purifying apparatus in the first embodiment of the present invention shown in Fig. 2A;
Fig. 4 is a view schematically showing one example of an exhaust gas system where the electrically heating exhaust gas purifying apparatus in the first embodiment of the present invention is built in;
Fig. 5 is a perspective view schematically illustrating a stuffing step of inserting an exhaust gas-treating body on which the holding sealing material in the first embodiment of the present invention is wound into a metal casing by stuffing;
Fig. 6A is a side surface view schematically showing a tester for measuring insulation resistance and is a perspective view schematically showing the state where a sample for measurement is impregnated with water;
Fig. 6B is a perspective view schematically showing the state where the insulation resistance is measured by a conduction tester;
Fig. 7 is a graph showing measurement results of the insulation resistance measurement test for each holding sealing material produced in Example 1 and Comparative Example 1;
Fig. 8A is a perspective view schematically showing a holding sealing material in a second embodiment of the present invention; and
Fig. 8B is a C-C line cross-sectional view of the holding sealing material in the second embodiment of the present invention shown in Fig. 8A.

### MODES FOR CARRYING OUT THE INVENTION

### (First Embodiment)

Hereinafter, a first embodiment which is one embodiment of the holding sealing material of the present invention and one embodiment of an electrically heating exhaust gas purifying apparatus of the present invention will be described with reference to drawings.

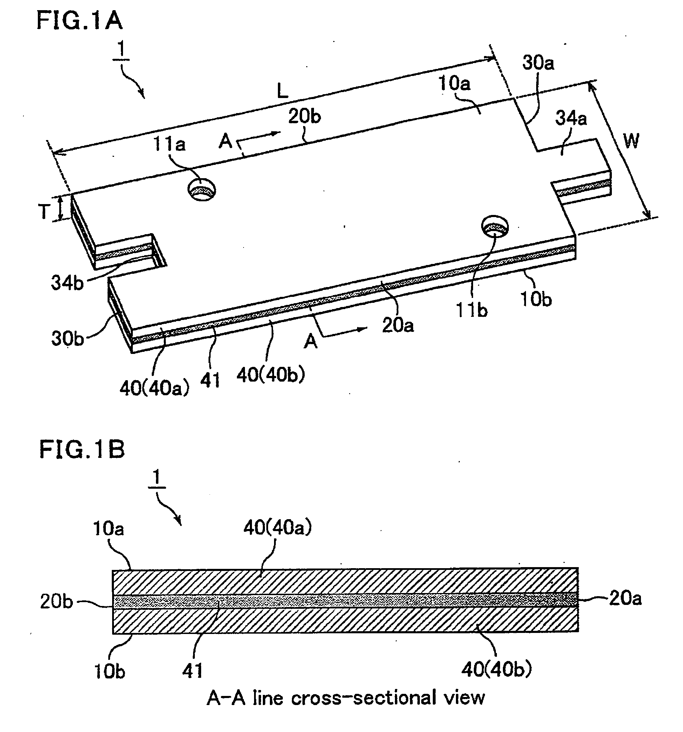

Fig. 1A is a perspective view schematically showing one example of the holding sealing material of the present invention, and Fig. 1B is an A-A line cross-sectional view of the holding sealing material of the present invention shown in Fig. 1A.

The shape of a holding sealing material 1 in this embodiment shown in Fig. 1A is approximately a rectangular shape in a plane view having a prescribed length (shown with the arrow L in Fig. 1A), width (shown with the arrow W in Fig. 1A), and thickness (shown with the arrow T in Fig. 1A).
The holding sealing material 1 in this embodiment has a first main surface 10a, a second main surface 10b facing the first main surface 10a, a first long side surface 20a, a second long side surface 20b facing the first long side surface 20a, a first short side surface 30a, and a second short side surface 30b facing the first short side surface 30a.
The holding sealing material 1 also has through hole parts 11a and 11b for inserting electrodes.

The holding sealing material 1 in this embodiment includes an inorganic fiber sheet 40 and a water-proof insulation sheet 41.
In the example shown in Figs. 1A and 1B, a first inorganic fiber sheet 40a, the water-proof insulation sheet 41, and a second inorganic fiber sheet 40b are layered in this order and the water-proof insulation sheet 41 is sandwiched between the first inorganic fiber sheet 40a and the second inorganic fiber sheet 40b.
That is, the water-proof insulation sheet 41 entirely covers one main surface (lower surface) of the first inorganic fiber sheet 40a and entirely covers one main surface (upper surface) of the second inorganic fiber sheet 40b.
Additionally, it is sufficient for the holding sealing material of the present invention to include an inorganic fiber sheet and a water-proof insulation sheet, and these sheets do not need to be layered in this order.

The inorganic fiber sheet 40 (the first inorganic fiber sheet 40a and the second inorganic fiber sheet 40b) has approximately the same shape as that of the holding sealing material 1 described above, except that the thickness is thin.
The inorganic fiber sheet 40 includes inorganic fibers such as silica fibers, alumina fibers, or alumina-silica fibers which are interlaced with one another. The inorganic fiber sheet 40 is like a nonwoven fabric.
The inorganic fiber sheet 40 is thus excellent in characteristics such as insulating properties, flexibility, impact absorption, and heat resistance.

The water-proof insulation sheet 41 has approximately the same shape as that of the holding sealing material 1 described above, except that the thickness is thin.
In this specification, the water-proof insulation sheet refers to a sheet constituted so as to have a coefficient of water absorption of 0 to 3%, a volume resistivity at normal temperature of 10⁷ Ωm to 10¹⁴ Ωm, a decrease ratio in the volume resistivity of 1/1000 Ωm or lower after heating at 550°C for 1 hour as compared with the volume resistivity before heating, and contain mainly inorganic substances.
The water-proof insulation sheet 41 is excellent in characteristics such as insulating properties and water-proofness.
In addition, the coefficient of water absorption of the water-proof insulation sheet means a value measured after carrying out an immersion treatment of immersing the water-proof insulation sheet in water at 20°C for 24 hours. Specifically, it is a value (%) calculated by subtracting the weight of the water-proof insulation sheet before immersion treatment from the weight of the water-proof insulation sheet after immersion treatment; dividing the calculated value by the weight of the water-proof insulation sheet before immersion treatment; and multiplying the calculated value by 100.

The holding sealing material 1 in this embodiment including the inorganic fiber sheet 40 and the water-proof insulation sheet 41 having configurations and characteristics as described above is excellent in characteristics such as insulating properties, flexibility, impact absorption, heat resistance, and water-proofness.

In the case where the holding sealing material 1 in this embodiment is used in the electrically heating exhaust gas purifying apparatus of this embodiment described below, the first inorganic fiber sheet 40a of the holding sealing material 1 may be arranged in the metal casing side and the second inorganic fiber sheet 40b may be arranged in the metal casing side.
The following will be described while exemplifying the case where the first inorganic fiber sheet 40a of the holding sealing material 1 is arranged in the metal casing side.
The holding sealing material 1 also has through hole parts 11a and 11b for inserting electrodes.

The first inorganic fiber sheet 40a and the water-proof insulation sheet 41 may be bonded with an inorganic adhesive or may be physically layered. Similarly, the water-proof insulation sheet 41 and the second water-proof insulation sheet 40b may be bonded with an inorganic adhesive or may be physically layered.
The first inorganic fiber sheet 40a, the water-proof insulation sheet 41, and the second inorganic fiber sheet 40b are desirably bonded with an inorganic adhesive.

Examples of the inorganic adhesive include a ceramic adhesive containing metal alkoxides and a ceramic adhesive containing alumina sol or silica sol.

The size of the holding sealing material 1 in this embodiment is desirably length (L) 100 to 1000 mm x width (W) 20 to 500 mm × thickness (T) 5 to 30 mm.
It is because the holding sealing material having the size described above is consistent with the size of an exhaust gas-treating body, which is an object on which the holding sealing material is wound.

The weight per unit area of the holding sealing material 1 in this embodiment is desirably 400 to 10000 g/m², more desirably 1000 to 6000 g/m², and even more desirably 900 to 3000 g/m². It is because if the weight per unit area of the holding sealing material 1 is within the range, the holding sealing material has a proper volume and is provided with a proper repulsive force.
On the other hand, if the weight per unit area of the holding sealing material is lower than 900 g/m², the volume of the holding sealing material may possibly become too high and if the weight per unit area of the holding sealing material exceeds 3000 g/m², the volume of the holding sealing material may possibly become too low.

The density of the holding sealing material 1 in this embodiment is desirably 0.08 to 0.30 g/cm³ and more desirably 0.10 to 0.20 g/cm³.
If the density of the holding sealing material 1 in this embodiment is 0.08 to 0.30 g/cm³, the inorganic fibers are well interlaced with one another and therefore, the inorganic fibers are hardly separated and the shape of the holding sealing material can be kept in a prescribed shape. Since the holding sealing material also has proper flexibility, the holding sealing material is provided with improved winding properties onto an exhaust gas-treating body.
Contrarily, if the density of the holding sealing material is lower than 0.08 g/cm³, the inorganic fibers are weakly interlaced with one another and therefore, the Inorganic fibers are easily separated and it becomes difficult to keep. the shape of the holding sealing material in a prescribed shape. Further, if the density of the holding sealing material exceeds 0.30 g/cm³, the holding sealing material becomes hard and the winding properties onto an exhaust gas-treating body are lowered.

The thickness of the first inorganic fiber sheet 40a is desirably 1 to 50 mm, the thickness of the second inorganic fiber sheet 40b is desirably 1 to 50 mm, and the thickness of the water-proof insulation sheet 41 is desirably 0.005 to 5 mm and more desirably 1 to 3 mm.
If the thickness of the first inorganic fiber sheet 40a is lower than 1 mm, the thickness of the first inorganic fiber sheet 40a is so thin that the water-proof insulation sheet 41 is easy to be broken when impact such as vibration is applied to the metal casing from the outside in the case where the holding sealing material is used in an electrically heating exhaust gas purifying apparatus.
If the thickness of the first inorganic fiber sheet 40a exceeds 50 mm, the thickness of the first inorganic fiber sheet 40a becomes so thick that winding becomes difficult and the holding sealing material tends to be cracked.
If the thickness of the second inorganic fiber sheet 40b is lower than 1 mm, the thickness of the second inorganic fiber sheet 40b is so thin that heat is easily transferred to the water-proof insulation sheet 41 and the water-proof insulation sheet 41 is easy to be into melting loss when the exhaust gas-treating body is heated to high temperature in the case where the holding sealing material is used in an electrically heating exhaust gas purifying apparatus.
If the thickness of the second inorganic fiber sheet 40b exceeds 50 mm, the thickness of the second inorganic fiber sheet 40b becomes so thick that winding becomes difficult and the holding sealing material tends to be cracked.
If the thickness of the water-proof insulation sheet 41 is lower than 0.005 mm, the thickness of the water-proof insulation sheet 41 is so thin that the water-proofness and the insulating properties may be lowered in some cases.
If the thickness of the water-proof insulation sheet 41 exceeds 5 mm, the thickness of the water-proof insulation sheet 41 is so thick that the flexibility lowers and the water-proof insulation sheet is easy to be cracked.
The thicknesses of the first inorganic fiber sheet 40a and the second inorganic fiber sheet 40b may be approximately same or different from each other.

A projected portion 34a is formed in the first short side surface 30a of the holding sealing material 1 in this embodiment and a recessed portion 34b having a shape fitted with the projected portion 34a in the case where the holding sealing material 1 is rolled and the first short side surface 30a and the second short side surface 30b are butted with each other is formed in the second short side surface 30b of the holding sealing material 1 in this embodiment.
Additionally, the projected portion 34a and the recessed portion 34b may be formed in the holding sealing material 1 if necessary, and they may not be formed. In the case where the projected portion 34a and the recessed portion 34b are not formed in the holding sealing material 1, the first short side surface 30a and the second short side surface 30b become both flat surfaces.

The shapes of the projected portion 34a and the recessed portion 34b of the holding sealing material 1 are not particularly limited if the projected portion 34a and the recessed portion 34b are fitted with each other, but it is preferable that the projected portion 34a projected in a size of width 10 mm × length 10 mm to width 200 mm × length 200 mm is formed in a portion of the first short side surface 30a and the recessed portion 34b to be fitted therewith is formed in a portion of the second short side surface 30b. It is because the dimension variation of the exhaust gas-treating body or the holding sealing material can be adjusted by the gap between the projected and recessed portions, and the sealing property of the holding sealing material can be maintained.

In the first inorganic fiber sheet 40a and the second inorganic fiber sheet 40b, inorganic fibers are interlaced with one another.
The inorganic fibers constituting the first inorganic fiber sheet 40a and the second inorganic fiber sheet 40b are preferably at least one kind of inorganic fibers selected from the group consisting of alumina fibers, alumina-silica fibers, silica fibers, biosoluble fibers, and glass fibers.
The type of the inorganic fibers constituting the first inorganic fiber sheet 40a and the type of the inorganic fibers constituting the second inorganic fiber sheet 40b may be the same or different from each other.
In the case where the first inorganic fiber sheet 40a is arranged in the metal casing side and the second inorganic fiber sheet 40b is arranged in the exhaust gas-treating body side, it is desirable that the first inorganic fiber sheet 40a is formed using silica fibers or the like excellent in elasticity and the second inorganic fiber sheet 40b is formed using alumina fibers, alumina-silica fibers, or the like excellent in heat resistance.
It is because the exhaust gas-treating body side is heated to temperature higher than that in the metal casing side and therefore fibers with high heat resistance are preferable to be used, and the metal casing side is not heated so high temperature and therefore, fibers with high elasticity for improving winding properties are preferable to be used.

The alumina fibers may contain an additive, for example, CaO, MgO, and ZrO₂ other than alumina..
The composition ratio of alumina-silica fibers on the basis of weight ratio is preferably Al₂O₃ : SiO₂ = 60 : 40 to 80 : 20 and more preferably Al₂O₃ : SiO₂ = 70 : 30 to 74 : 26.
It is because in the case of such a composition ratio, a mullite crystal is easy to be formed and if the mullite crystal is formed, heat resistance and fiber strength can be improved.
The silica fibers may contain an additive, for example, CaO, MgO, and ZrO₂ other than silica.
The biosoluble fibers are inorganic fibers including at least one kind compound selected from the group consisting of alkali metal compounds, alkaline earth metal compounds, and boron compounds.
Since the biosoluble fibers are easy to be dissolved even if taken in the human body, the holding sealing material having an inorganic fiber sheet in which the biosoluble fibers are interlaced with one another is excellent in safety for the human body. Examples of the alkali metal compounds include oxides or the like of Na and K; and examples of the alkaline earth metal compounds include oxides or the like of Mg, Ca, and Ba. Examples of the boron compounds include oxides or the like of B.

The specific composition of the biosoluble fibers may be composition containing 60 to 85 wt% of silica and 15 to 40 wt% of at least one kind of compound selected from the group consisting of alkali metal compounds, alkaline earth metal compounds, and boron compounds.
The silica refers to SiO or SiO₂.
Examples of the alkali metal compounds include oxides or the like of Na and K; and examples of the alkaline earth metal compounds include oxides or the like of Mg, Ca, and Ba. Examples of the boron compounds include oxides or the like of B.

In the composition of the biosoluble fibers, if the content of silica is lower than 60 wt%, the fibers are difficult to be produced by a glass fusion method and fiber formation becomes difficult.
Further, if the content of silica is lower than 60 wt%, since the content of silica having flexibility is so low that the structure of the biosoluble fibers tends to be fragile and the ratio of at least one kind of compound selected from the group consisting of alkali metal compounds, alkaline earth metal compounds, and boron compounds, which are easy to be dissolved in a physiological saline solution, becomes relatively high and therefore, the biosoluble fibers tend to be dissolved too easily in a physiological saline solution.
On the other hand, if the content of silica exceeds 85 wt%, the ratio of at least one kind of compound selected from the group consisting of alkali metal compounds, alkaline earth metal compounds, and boron compounds becomes relatively low and therefore, the biosoluble fibers tend to be too difficult to be dissolved in a physiological saline solution.
In addition, the content of silica is calculated by converting the amounts of SiO and SiO₂ into the amount of SiO₂.

In the composition of the biosoluble fibers, the content of at least one kind of compound selected from the group consisting of alkali metal compounds, alkaline earth metal compounds, and boron compound is preferably 15 to 40 wt%. If the content of at least one kind of compound selected from the group consisting of alkali metal compounds, alkaline earth metal compounds, and boron compounds is lower than 15 wt%, the biosoluble fibers tend to be too difficult to be dissolved in a physiological saline solution.
On the other hand, if the content of at least one kind of compound selected from the group consisting of alkali metal compounds, alkaline earth metal compounds, and boron compound exceeds 40 wt%, the biosoluble fibers are difficult to be produced by a glass fusion method and fiber formation becomes difficult. On the other hand, if the content of at least one kind of compound selected from the group consisting of alkali metal compounds, alkaline earth metal compounds, and boron compounds exceeds 40 wt%, the structure of the biosoluble fibers tends to be fragile and the biosoluble fibers tend to be dissolved too easily in a physiological saline solution.

The solubility of the biosoluble fibers in a physiological saline solution is desirably 30 ppm or higher. If the solubility of the biosoluble fibers in a physiological saline solution is lower than 30 ppm, the inorganic fibers are difficult to be discharged out of the human body in the case where the inorganic fibers are taken in the human body.
The solubility can be measured by the following method.
(I) First, after 2.5 g of inorganic fibers are suspended in distilled water by using a blender for food, the inorganic fibers are precipitated by allowing the suspension to stand still and after the supernatant solution is removed by decantation, the resultant is dried at 110°C to remove the remaining liquid and thus obtain an inorganic fiber sample.

(II) A physiological saline solution is prepared by diluting 6.780 g of sodium chloride, 0.540 g of ammonium chloride, 2.270 g of sodium hydrogen carbonate, 0.170 g of disodium hydrogen phosphate, 0.060 g of sodium citrate dihydrate, 0.450 g of glycin, and 0.050 g of sulfuric acid (specific gravity 1.84) with 1 litter (L) of distilled water.

(III) After 0.50 g of the inorganic fiber sample prepared in (I) and 25 cm³ of the physiological saline solution prepared in (II) are put in a centrifugal tube and well shaken, the mixture is treated at 37°C and 20 cycles/minute for 5 hours in a shaking incubator.
The centrifugal tube is taken out thereafter and centrifugal separation is carried out at 4500 rpm for 5 minutes and the supernatant is taken out by an injector.
(IV) Next, the supernatant solution is filtered by a filter (cellulose nitrate membrane filter with 0.45 µm) to obtain a sample, and regarding the obtained sample, the solubility of silica, that of calcium oxide, and that of magnesium oxide in a physiological saline solution are measured by atomic absorption spectrometry.

In the holding sealing material 1 in this embodiment, the average fiber length of the inorganic fibers constituting the first inorganic fiber sheet 40a and the second inorganic fiber sheet 40b is desirably 0.5 to 100 mm. If the average fiber length of the inorganic fibers is 0.5 to 100 mm, the first inorganic fiber sheet 40a and the second inorganic fiber sheet 40b are provided with high strength and the holding sealing material 1 is thus provided with improved strength.
If the average fiber length of the inorganic fibers is shorter than 0.5 mm, the fiber length of the inorganic fiber is so short that the inorganic fibers are interlaced insufficiently with one another and the strength of the first inorganic fiber sheet and that of the second inorganic fiber sheet are lowered. On the other hand, if the average fiber length of the inorganic fibers exceeds 100 mm, the fiber length of the inorganic fiber is so long that the handling properties of the inorganic fibers are deteriorated at the time of producing the first inorganic fiber sheet and the second inorganic fiber sheet.

The average fiber diameter of the inorganic fibers constituting the first inorganic fiber sheet 40a and the second inorganic fiber sheet 40b is desirably 3 to 10 µm and more desirably 5 to 7 µm.
If the average fiber diameter of the inorganic fibers is 3 to 10 µm, it is made possible to give sufficiently high strength and flexibility to the inorganic fibers and improve the shear strength of the holding sealing material.
If the average fiber diameter of the inorganic fibers is shorter than 3 µm, the inorganic fibers tend to be thin and easily cut, and the tensile strength of the inorganic fibers becomes insufficient. On the other hand, if the average fiber diameter of the inorganic fibers exceeds 10 µm, the inorganic fibers tend to be difficult to bend and the flexibility thus becomes insufficient.

The water-proof insulation sheet 41 is desirably a sheet obtained by bonding a flaky inorganic material with an adhesive.
The flaky inorganic material preferably includes one or more kinds of materials selected from the group consisting of mica, vermiculite, montmorillonite, iron-montmorillonite, beidellite, saponite, hectorite, stevensite, nontronite, magadiite, ilerite, kanemite, smectite, and layered titanate. The adhesive preferable includes one or more kinds of materials selected from the group consisting of silicones, polyethylene glycols, polyalkylene glycols, phosphoric acid esters, alkylbenzene, poly-α-olefins, polyol esters, alkylnaphthalene, halocarbons, polyallyl alkanes, polyphenyls, silicic acid esters, and polyphenyl ethers.
The water-proof insulation sheet 41 is desirably a mica sheet obtained by bonding mica with silicone.

The coefficient of water absorption of the water-proof insulation sheet 41 is desirably 3% or lower, more desirably 0 to 3%, and even more desirably 0 to 2%.
If the coefficient of water absorption of the water-proof insulation sheet 41 exceeds 3%, the water-proofness is low and condensed water may possibly penetrate the water-proof insulation sheet and therefore, an exhaust gas purifying apparatus tends to cause an electric leakage in the case where electricity is applied to an exhaust gas-treating body.

The insulation resistance of the water-proof insulation sheet 41 is desirably 10⁸ Ωm to 10¹⁴ Ωm in volume resistivity at normal temperature, and a decrease ratio in the volume resistivity after heating at 550°C for 1 hour is desirably 1/500 Ω m or lower as compared with the volume resistivity before heating. If the insulation resistance of the water-proof insulation sheet 41 and the decrease ratio in the volume resistivity after heating at 550°C for 1 hour as compared with the volume resistivity before heating are within the ranges, the holding sealing material using the water-proof insulation sheet can assure good insulating properties at the time of using an electrically heating exhaust gas purifying apparatus.

The holding sealing material 1 in this embodiment may further contain an organic binder.
If the holding sealing material 1 in this embodiment contains an organic binder, the inorganic fibers constituting the first inorganic fiber sheet 40a and the second inorganic fiber sheet 40b can be bonded to one another and the holding sealing material can be compressed. When the holding sealing material is used in an electrically heating exhaust gas purifying apparatus, at the time of use of the electrically heating exhaust gas purifying apparatus, the organic binder is decomposed by the heat of exhaust gas, the adhesion of the inorganic fibers constituting the first inorganic fiber sheet and the second inorganic fiber sheet is released, the first inorganic fiber sheet and the second inorganic fiber sheet are expanded, and thus the holding sealing material exhibits high holding force.

The organic binder may be, for example, acrylic resins, rubber such as acrylic rubber, water-soluble organic polymers such as carboxymethyl cellulose and polyvinyl alcohol, thermoplastic resins such as styrene resins, and thermosetting resins such as epoxy resins. Particularly preferable among them are acrylic rubber, acrylonitrile-butadiene rubber, and styrene-butadiene rubber.

The total amount of the organic binder contained in the entire of the holding sealing material 1 in this embodiment is desirably 0. 5 to 20 wt% in the total weight of the holding sealing material 1.
If the total amount of the organic binder contained in the entire of the holding sealing material is 0.5 to 20 wt% in the total weight of the holding sealing material, the inorganic fibers can be more firmly bonded to one another and the first inorganic fiber sheet and second inorganic fiber sheet (holding sealing material) can be provided with improved strength. If the total amount of the organic binder is 0.5 to 20 wt% in the total weight of the holding sealing material, the volume of the first inorganic fiber sheet and second inorganic fiber sheet (holding sealing material) can be properly lowered and a proper repulsive force can be obtained.
On the other hand, if the total amount of the organic binder contained in the entire of the holding sealing material is lower than 0.5 wt% in the total weight of the holding sealing material, the amount of the organic binder is so low that the inorganic fibers is easily scattered and the strength of the first inorganic fiber sheet and second inorganic fiber sheet (holding sealing material) tends to be lowered.
Further, if the total amount of the organic binder contained in the entire of the holding sealing material exceeds 20 wt% in the total weight of the holding sealing material, the amount of an organic component derived from the organic binder is increased in the exhaust gas emitted in the case where the holding sealing material is used in an electrically heating exhaust gas purifying apparatus, and thus a load tends to be applied to the environments.

In the case where the holding sealing material 1 in this embodiment is used in an electrically heating exhaust gas purifying apparatus, even when condensed water is generated by introducing exhaust gas into the electrically heating exhaust gas purifying apparatus and condensing steam contained in the exhaust gas or even when condensed water is generated by cooling the electrically heating exhaust gas purifying apparatus, the condensed water does not penetrate the water-proof insulation sheet 41 having water-proofness. For this reason, since the condensed water is thus shut out by the water-proof insulation sheet 41, the holding sealing material as a whole is prevented from complete water absorption.
Consequently, since the insulating properties are kept by the holding sealing material 1 between the electrode parts and the metal casing and between the metal casing and the exhaust gas-treating body to which electricity is applied via the electrode parts, the exhaust gas purifying apparatus hardly causes an electric leakage and is provided with improved safety even if electricity is applied to the exhaust gas-treating body.

Next, the configuration of the electrically heating exhaust gas purifying apparatus in this embodiment will be described with reference to drawings.

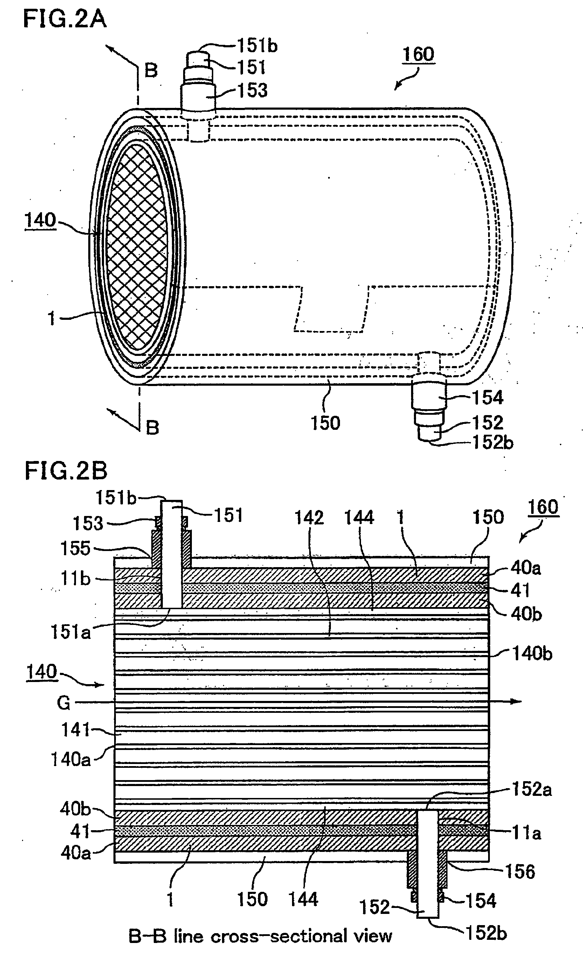

Fig. 2A is a perspective view schematically showing an electrically heating exhaust gas purifying apparatus in the first embodiment of the present invention, and Fig. 2B is a B-B line cross-sectional view of the electrically heating exhaust gas purifying apparatus in the first embodiment of the present invention shown in Fig. 2A.

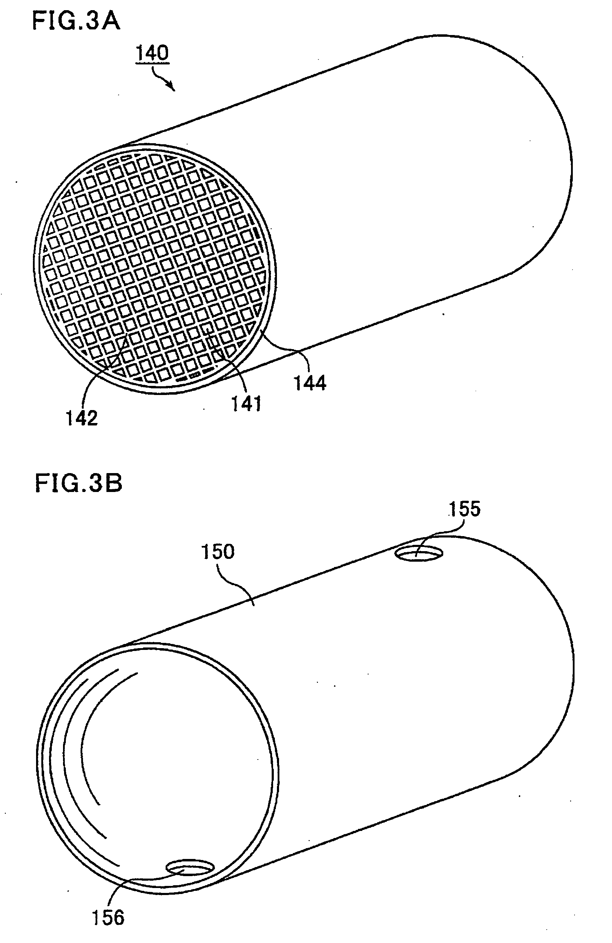

Fig. 3A is a perspective view schematically showing an exhaust gas-treating body constituting the electrically heating exhaust gas purifying apparatus in the first embodiment of the present invention shown in Fig. 2A, and Fig. 3B is a perspective view schematically showing a metal casing constituting the electrically heating exhaust gas purifying apparatus in the first embodiment of the present invention shown in Fig. 2A.

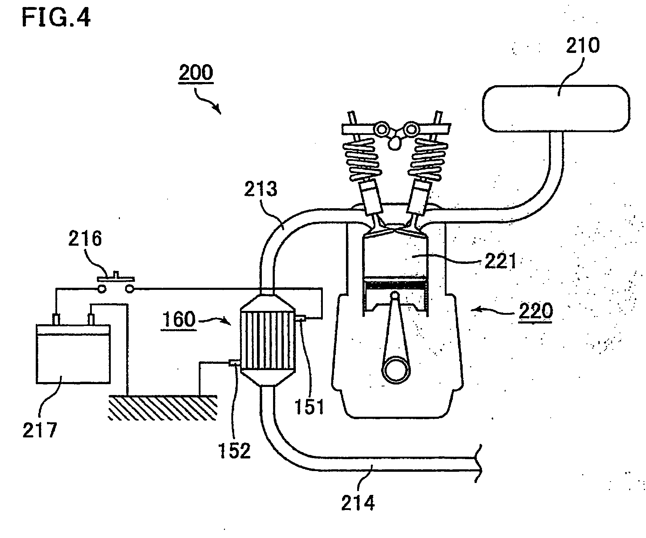

Fig. 4 is a view schematically showing one example of an exhaust gas system where the electrically heating exhaust gas purifying apparatus in the first embodiment of the present invention is built in.

As shown in Figs 2A and 2B, an electrically heating exhaust gas purifying apparatus 160 is configured by an exhaust gas-treating body 140, a metal casing 150 for housing the exhaust gas-treating body 140, a holding sealing material 1 arranged between the exhaust gas-treating body 140 and the metal casing 150 to hold the exhaust gas-treating body 140, a first electrode 151 and a first insulating material 153 covering the outer circumferential part of the first electrode 151, a second electrode 152 and a second insulating material 154 covering the outer circumferential part of the second electrode 152.

The first inorganic fiber sheet 40a of the holding sealing material 1 in this embodiment is in contact with the metal casing 150 and the second inorganic fiber sheet 40b of the holding sealing material 1 is in contact with the exhaust gas-treating body 140.

The exhaust gas-treating body 140 as shown in Figs 2B and 3A has a column-like body having a large number of through holes 141 divided by partitioning walls 142 and arranged in the longitudinal direction.

The exhaust gas-treating body 140 is made of a resistance heating body of, for example, silicon carbide, cordierite, and a metal (e.g., iron, aluminum, or stainless steel).

A coating layer 144 is provided on the outer circumference of the exhaust gas-treating body 140 for reinforcing the outer circumference part of the exhaust gas-treating body 140 or adjusting its shape or improving the heat insulation properties of the exhaust gas-treating body 140.
The exhaust gas-treating body 140 may be an exhaust gas-treating body including one honeycomb fired body integrally formed as shown Fig. 3A, or an exhaust gas-treating body obtained by combining a plurality of column-like honeycomb fired bodies having a large number of through holes divided by the partitioning walls and arranged in the longitudinal direction via an adhesive layer containing mainly a ceramic.

The exhaust gas-treating body 140 supports a catalyst capable of converting harmful gas components such as CO, HC, and NOₓ.

Examples of the catalyst include noble metals such as platinum, palladium, and rhodium; alkali metals such as potassium and sodium; alkaline earth metals such as barium, and metal oxides such as CeO₂. These catalysts may be used alone or two or more thereof may be used in combination.
A catalyst-supporting layer including an alumina film with a high specific surface area may be formed onto the exhaust gas-treating body 140, and the catalyst may be supported via the catalyst-carrying layer.

The metal casing 150 will be described.
The metal casing 150 shown in Fig. 3B mainly includes a metal such as stainless steel and its shape is approximately cylindrical.
The inner diameter thereof is slightly smaller than the diameter of a wound body in the state where the holding sealing material 1 is wound around the exhaust gas-treating body 140, and the length thereof is approximately the same as that of the exhaust gas-treating body 140 in the longitudinal direction.
A first through hole 155 is formed so that the first electrode 151 and the first insulating material 153 covering the outer circumferential part of the first electrode 151 penetrate the first through hole 155.
A second through hole 156 is formed so that the second electrode 152 and the second insulating material 154 covering the outer circumferential part of the second electrode 152 penetrate the second through hole 156.

A material for the metal casing 150 may be, but is not limited to the stainless steel, metals such as alumina and iron as long as it has heat resistance.
The metal casing may be a metal casing obtained by dividing an approximately cylindrical metal casing into a plurality of metal casing pieces along the longitudinal direction (that is, clamshell), a cylindrical metal casing having a slit (opening part) in one position extended in the longitudinal direction and thus having a C-shaped or U-shaped cross section, or a metal sheet which can be formed into a cylindrical metal casing by winding and fastening the metal sheet around the outer circumference of the holding sealing material wound onto the exhaust gas-treating body.
An introduction pipe for introducing exhaust gas emitted from an engine and a discharge pipe for discharging the exhaust gas passed through the electrically heating exhaust gas purifying apparatus outside may be connected to an end part of the metal casing 150.

The configuration of the holding sealing material 1 in this embodiment will not be given since it is already described herein.

As shown in Figs 2A and 2B, the outer circumferential part of the first electrode 151 is covered with the first insulating material 153 for assuring the insulating properties between the first electrode 151 and the metal casing 150.
The first electrode 151 and the first insulating material 153 are fitted in the first through hole 155 of the metal casing 150, and the first electrode 151 penetrates the through hole part 11b of the holding sealing material 1.
A first end part 151a of the first electrode 151 is in contact with the exhaust gas-treating body 140 and a second end part 151b of the first electrode 151 is exposed outside of the metal casing 150.

The outer circumferential part of the second electrode 152 is covered with a second insulating material 154 for assuring the insulating properties between the second electrode 152 and the metal casing 150.
The second electrode 152 and the second insulating material 154 are fitted in the second through hole 156 of the metal casing 150 and the second electrode 152 penetrates the through hole part 11a of the holding sealing material 1.
A first end part 152a of the second electrode 152 is in contact with the exhaust gas-treating body 140 and a second end part 152b of the second electrode 152 is exposed outside of the metal casing 150.
Consequently, the first electrode 151, the second electrode 152, and the exhaust gas-treating body 140 can be electrically communicated by connecting the second end part 151b of the first electrode 151 and the second end part 152b of the second electrode 152 to an electric power source.
On the other hand, the first electrode 151, the second electrode 152 and the exhaust gas-treating body 140 are insulated from the metal casing 150 by the holding sealing material 1, the first insulating material 153, and the second insulating material 154.

The reason for purifying exhaust gas by the electrically heating exhaust gas purifying apparatus 160 having the above mentioned configuration will be described below with reference to Fig. 2B and Fig. 4.

An exhaust gas system 200 shown in Fig. 4 is mainly configured by an engine 220 to which a fuel is supplied from a fuel tank 210, a first exhaust pipe 213 one end of which is connected to a combustion chamber 221 of the engine 220 and the other end of which is connected to an end part of the exhaust gas flow-in side of the electrically heating exhaust gas purifying apparatus 160 in this embodiment, the electrically heating exhaust gas purifying apparatus 160, and a second exhaust pipe 214 one end of which is connected to an end part of the exhaust gas flow-out side of the electrically heating exhaust gas purifying apparatus 160 and the other end of which is connected to a muffler not illustrated.
The first electrode 151 and the second electrode 152 of the electrically heating exhaust gas purifying apparatus 160 are connected to an electric power source 217 equipped with a switch 216.
Exhaust gas emitted from the combustion chamber 221 of the engine 220, passed through the first exhaust pipe 213, and introduced into the electrically heating exhaust gas purifying apparatus 160 from the end part of the exhaust gas flow-in side is passed through the electrically heating exhaust gas purifying apparatus 160 and thereafter discharged outside from the end part of the exhaust gas flow-out side through the second exhaust pipe 214.

The flow of the exhaust gas introduced into the electrically heating exhaust gas purifying apparatus 160 will be described in detail with reference to Fig. 2B.
As shown in Fig. 2B, exhaust gas flowing in the electrically heating exhaust gas purifying apparatus 160 (exhaust gas is shown with G in Fig. 2B and flow of the exhaust gas is shown by the arrow) flows in the through holes 141 opened in an end surface of the exhaust gas flow-in side 140a of the exhaust gas-treating body 140 and flows out of the through holes 141 opened in an end surface of the exhaust gas flow-out side 140b while the exhaust gas is brought into contact with the partitioning walls 142 dividing the through holes 141.
During this process, harmful gas or the like in the exhaust gas can be converted and removed by the catalyst supported on the partitioning walls 142 of the exhaust gas-treating body 140.

The electrically heating exhaust gas purifying apparatus 160 in this embodiment can improve the exhaust gas purification efficiency by rapidly heating the exhaust gas-treating body 1 immediately after starting of an engine.
Concretely, the switch 216 shown in Fig. 4 is turned on and electricity is applied to the exhaust gas-treating body 140 through the first electrode 151 and the second electrode 152, so that the exhaust gas-treating body 140, which is a resistance heating body, can be rapidly heated.
Consequently, even if the temperature of exhaust gas is in a low state immediately after starting of an engine, the exhaust gas-treating body 140 can be rapidly heated to the catalytic activation temperature and therefore, harmful gas or the like can be efficiently converted.

The respective through holes in one end part of the exhaust gas-treating body 140 may be plugged by a plug material to form plugged cells. The exhaust gas-treating body as described above can work as a diesel particulate filter (DPF) for removing particulate matter (hereinafter, simply referred to also as PM) contained in exhaust gas of a diesel engine.
In this case, the exhaust gas emitted from the diesel engine and flowing in the electrically heating exhaust gas purifying apparatus flows in one cell opened in the exhaust gas flow-in side end surface of the exhaust gas-treating body and passes through a cell wall dividing the cells. At this time, PM of the exhaust gas is collected by the cell wall and the exhaust gas is purified.
The purified exhaust gas flows out of another cell opened in the exhaust gas flow-out side end surface and is discharged outside.

Next, a method for producing the holding sealing material in this embodiment and a method for producing an electrically heating exhaust gas purifying apparatus will be described.

The holding sealing material in this embodiment is produced through the following steps (1) to (4).
Herein, the case where alumina-silica fibers are used as inorganic fibers constituting both a first inorganic fiber sheet and a second inorganic fiber sheet will be described; however, the inorganic fibers constituting the holding sealing material in this embodiment are not limited to alumina-silica fibers and inorganic fibers having various kinds of compositions such as alumina fibers or the like described above may be used.

### (1) First inorganic fiber sheet production step

### (1-1) Inorganic fiber production step

Silica sol is added to an aqueous basic aluminum chloride solution, which is adjusted so as to control the Al content and the atomic ratio of Al and Cl to be prescribed values, in such a manner that the composition ratio of inorganic fibers after firing may give Al₂O₃ : SiO₂ = 60 : 40 to 80 : 20 (weight ratio). Aiming to improve the formability, a mixed solution is prepared by adding a proper amount of an organic polymer.
The obtained mixed solution is concentrated and used as a mixture for spinning fibers and the mixture for spinning fibers is subjected to fiber spinning by a blowing method to produce inorganic fiber precursors having a prescribed average fiber diameter and a prescribed average fiber length.
The blowing method is a method including supplying a mixture for spinning fibers which is extruded out of a nozzle for supplying a mixture for spinning fibers to high speed gas current (air current) blown out of an air nozzle and spinning inorganic fiber precursors.

### (1-2) Compression step

Next, the inorganic fiber precursors are compressed to produce a continuous long sheet in a prescribed size.
The compression step can be carried out by, for example, a cross-layer method as described in detail below.
The cross layer method is carried out using a layering apparatus constituted of a belt conveyer for transportation in a constant direction and an arm capable of reciprocating on the belt conveyer in the direction perpendicular to the transportation direction of the belt conveyer. The arm supplies the inorganic fiber precursors (precursor webs) collected in a thin sheet manner.
In the case of producing a sheet by the cross layer method using this layering apparatus, first, the belt conveyer is driven for transportation. In this state, while the arm is reciprocated in the direction perpendicular to the transportation direction of the belt conveyer, the precursor webs are continuously supplied to the belt conveyer from the arm. The precursor webs are thus continuously transported by the belt conveyer in the constant direction while being folded and layered a plurality of times on the belt conveyer. When the length of the layered precursor webs becomes proper for handling, the precursor webs are cut to produce a sheet in a prescribed size.
In the sheet produced by the cross layer method, most of the inorganic fiber precursors are arranged approximately in parallel to the first main surface and the second main surface and interlaced loosely with one another.

### (1-3) Cutting step

Next, the long sheet is cut in a prescribed size to produce a first precursor sheet.

### (1-4) Firing step

Successively, the first precursor sheet is fired at a highest temperature of 1000 to 1600°C to convert the inorganic fiber precursors into inorganic fibers and thus produce a first inorganic fiber sheet.
The produced first inorganic fiber sheet is a sheet having approximately a rectangular shape in a plane view and having a first main surface and a second main surface on the opposite to the first main surface. The inorganic fibers are interlaced with one another in the first inorganic fiber sheet.

### (2) Second inorganic fiber sheet production step

A second inorganic fiber sheet having approximately the same configuration as that of the first inorganic fiber sheet is produced through similar steps of the steps (1-1) to (1-4) in the first inorganic fiber sheet production step (1).
The produced second inorganic fiber sheet is a sheet having approximately a rectangular shape in a plane view and having a first main surface and a second main surface on the opposite to the first main surface. The inorganic fibers are interlaced with one another in the second inorganic fiber sheet.
In order to adjust the thickness of the first inorganic fiber sheet and the thickness of the second inorganic fiber sheet to desired values, the amount of the inorganic fiber precursors used may be decreased or the degree of compression of the inorganic fiber precursor may be changed.

### (3) Layering step

Separately, a water-proof insulation sheet is made available.
In the case where a mica sheet is used as the water-proof insulation sheet, the mica sheet is produced as follows.
First, a mica raw ore (soft mica or hard mica) is pulverized to adjust the prescribed particle size and dispersed in water or the like. The obtained dispersion liquid is subj ected to a paper production process to produce agglomerated mica.
The produced agglomerated mica is bonded by an adhesive including silicone and dried to produce a mica sheet.

Next, the water-proof insulation sheet is layered on the first inorganic fiber sheet in such a manner that a main surface of the first inorganic fiber sheet and one of the main surfaces of the water-proof insulation sheet are brought into contact with each other.
The second inorganic fiber sheet is layered on the water-proof insulation sheet in such a manner that the other main surface of the water-proof insulation sheet and a main surface of the second inorganic fiber sheet are brought into contact with each other.
In the case where the respective sheets are layered, an inorganic adhesive may be previously applied to the main surface of the first inorganic fiber sheet, the main surfaces of the water-proof insulation sheet, and the main surface of the second inorganic fiber sheet to be brought into contact with one another.
A layered sheet can be produced through the layering step as described above.

### (4) Molding and cutting step

The produced layered sheet is cut to produce a holding sealing material having a prescribed size. At this time, the cutting is carried out in such a manner that a projected portion is formed in a part of a first short side surface and a recessed portion with a shape to be fitted with the projected portion is formed in a part of a second short side surface among the end surfaces of the holding sealing material.
Specifically, the holding sealing material is produced by using a punching apparatus including a punching plate attached to a tip end of a piston and capable of reciprocating in the up and down direction and a mount plate facing the punching plate and on which a holding sealing material can be mounted.

A punching blade with a shape corresponding to the outer shape of a holding sealing material to be produced and an elastic member made from expansive and contractive rubber or the like are fixed on the punching plate. Further, a through hole is provided in the mount plate in the position corresponding to the punching blade so as to keep the punching blade from being contact with the mount plate in the case where the punching plate approaches the mount plate.

In the case where the holding sealing material is produced by punching using the punching apparatus, the layered sheet is set on the mount plate in such a manner that the first main surface of the layered sheet is in the punching plate side and the second main surface of the layered sheet is set in the mount plate side and the punching plate is moved in the up and down direction.
As a result, the layered sheet is pushed against the elastic member and shrunk in the thickness direction of the layered sheet and at the same time, the punching blade inserts in the inside of the layered sheet from the first main surface side of the layered sheet and the punching blade penetrates the layered sheet, so that the layered sheet is punched in a prescribed shape as shown in Fig. 1A, and the holding sealing material is produced.
In addition, in the case of producing a holding sealing material having no projected portion and no recessed portion in the short side surfaces, the molding and cutting step is not necessary.

Examples of a method for forming the through hole part in the holding sealing material include a method in which a holding sealing material is produced and then a through hole part is formed by punching the produced holding sealing material with a desired shape using a punching blade; and a method in which a through hole part is punched at the time of the molding and cutting step for the holding sealing material.

In the case where an organic binder is applied to the produced holding sealing material, the following step (5) is carried out.

### (5) Organic binder application step

In the case of producing a holding sealing material to which an organic binder is applied, the holding sealing material to which an organic binder is applied can be produced by carrying out the following steps (A) to (C).

### (A) Impregnation step

First, an impregnated holding sealing material is produced by evenly impregnating the entire of the holding sealing material with an organic binder solution containing the organic binder by flow coating or the like.
The organic binder solution can be produced by dissolving an organic binder in a solvent such as water or an organic solvent or dispersing an organic binder in a dispersant such as water.
The concentration of the organic binder solution is desirable to be properly adjusted in such a manner that the total amount of the organic binder contained in the entire of the holding sealing material to which the binder is applied and which is to be produced through the following steps is 0.5 to 20 wt% in the weight of the entire of the holding sealing material to which the binder is applied.

### (B) Suction step

Next, the excess organic binder solution is suctioned and removed from the impregnated holding sealing material by using a suction apparatus or the like.
The suction step is not necessarily carried out and if the amount of the organic binder solution contained in the impregnated holding sealing material is low, the impregnated holding sealing material obtained after the impregnation step may be subjected directly to the following drying step.

### (C) Drying step

Thereafter, the solvent or the like contained in the organic binder solution remaining in the impregnated holding sealing material is evaporated by using a hot air drying apparatus or the like while compressing the impregnated holding sealing material.
Through the steps as described above, the holding sealing material to which the binder is applied can be produced.

Next, a method for producing the electrically heating exhaust gas purifying apparatus in this embodiment will be described with reference to drawings.
The electrically heating exhaust gas purifying apparatus in this embodiment is produced through the following steps (1) and (2).

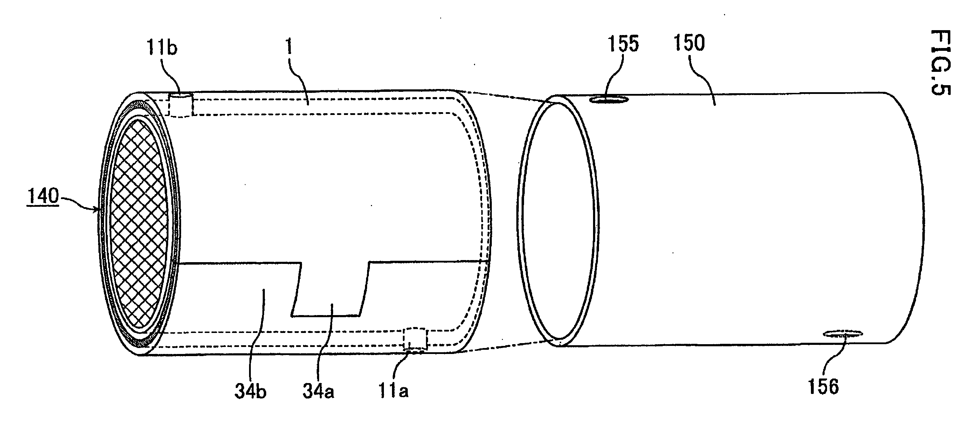

Fig. 5 is a perspective view schematically illustrating a stuffing step of inserting an exhaust gas-treating body on which the holding sealing material in the first embodiment of the present invention is wound into a metal casing by stuffing.

### (1) Stuffing step

The holding sealing material 1 is wound onto the outer circumference of the column-like exhaust gas-treating body 140 in such a manner that the projected portion 34a and the recessed portion 34b are fitted with each other.
As shown in Fig. 5, the exhaust gas-treating body 140 on which the holding sealing material 1 is wound (wound body) is inserted in the metal casing 150 by stuffing.
At the time of stuffing, the position of the through hole of the metal casing and the position of the through hole part of the holding sealing material are fitted. In the case where the position of the through hole of the metal casing and the position of the through hole part of the holding sealing material are different after stuffing, these positions are fitted so as to insert an electrode into the casing and the holding sealing material.
The inner diameter of the metal casing 150 is slightly shorter than the diameter of the wound body.

### (2) Electrode attachment step

Next, the first electrode 151 and the first insulating material 153 are attached in the first through hole 155.
Similarly, the second electrode 152 and the second insulating material 154 are attached in the second through hole 156.
At this time, the first electrode 151 and the second electrode 152 are attached in such a manner that each of the first electrode 151 and the second electrode 152 penetrates the through hole part 11a or 11b of the holding sealing material 1 and is in contact with the exhaust gas-treating body 140. The respective members are attached in such a manner that the insulating properties are maintained between the first electrode 151 and the metal casing 150 and between the second electrode 152 and the metal casing 150 by the first insulating material 153 and the second insulating material 154.
The electrically heating exhaust gas purifying apparatus 160 in this embodiment shown in Figs. 2A and 2B is produced through the stuffing step described above.

Hereinafter, the effects of the holding sealing material and the electrically heating exhaust gas purifying apparatus in the first embodiment of the present invention will be exemplified.
(1) The holding sealing material in this embodiment is excellent in insulating properties and water-proofness since a water-proof insulation sheet excellent in insulating properties and water-proofness is used.
Therefore, in an electrically heating exhaust gas purifying apparatus using the holding sealing material in this embodiment, the entire of the holding sealing material is prevented from complete water absorption since condensed water is shut out by the water-proof insulation sheet even if the condensed water is generated.
Since the insulating properties are kept by the holding sealing material between the electrode parts and the metal casing and between the metal casing and the exhaust gas-treating body to which electricity is applied via the electrode parts, the exhaust gas purifying apparatus hardly causes an electric leakage and is provided with improved safety even if electricity is applied to the exhaust gas-treating body.
(2) Since the holding sealing material in this embodiment contains inorganic fiber sheets enriched with flexibility, the holding sealing material has excellent flexibility.
Therefore, the holding sealing material of the present invention is easy to be wound onto the outer circumferential surface of the exhaust gas-treating body having a prescribed shape such as a column-like shape or the like and excellent in handling properties.
(3) In the holding sealing material in this embodiment, the water-proof insulation sheet contains a flaky inorganic material, and the flaky inorganic material preferably includes one or more kinds of materials selected from the group consisting of mica, vermiculite, montmorillonite, iron-montmorillonite, beidellite, saponite, hectorite, stevensite, nontronite, magadiite, ilerite, kanemite, smectite, and layered titanate.
Since the water-proof insulation sheet is excellent in insulating properties and water-proofness, the insulating properties can be maintained by the holding sealing material between the electrode parts and the metal casing and between the metal casing and the exhaust gas-treating body to which electricity is applied via the electrode parts. Therefore, the effects of hardly causing an electric leakage in the exhaust gas purifying apparatus even if electricity is applied to the exhaust gas-treating body can be preferably obtained.
It is more desirable that the flaky inorganic material is mica.
(4) In the holding sealing material in this embodiment, the water-proof insulation sheet may contain an adhesive, and the adhesive includes one or more kinds of materials selected from the group consisting of silicones, polyethylene glycols, polyalkylene glycols, phosphoric acid esters, alkylbenzene, poly-α-olefins, polyol esters, alkylnaphthalene, halocarbons, polyallyl alkanes, polyphenyls, silicic acid esters, and polyphenyl ethers.
Therefore, the flaky inorganic materials can be firmly bonded to one another without deteriorating the flexibility, and the strength of the holding sealing material is increased. Since the flaky inorganic materials can be densely bonded to one another, water-proofness is improved and the insulating properties can be maintained by the holding sealing material between the electrode parts and the metal casing and between the metal casing and the exhaust gas-treating body to which electricity is applied via the electrode parts. Therefore, the effects of hardly causing an electric leakage in the exhaust gas purifying apparatus even if electricity is applied to the exhaust gas-treating body can be preferably obtained.
It is more desirable that the adhesive is silicone.
(5) In the holding sealing material in this embodiment, the water-proof insulation sheet is sandwiched between the first inorganic fiber sheet and the second inorganic fiber sheet.
Therefore, an electrically heating exhaust gas purifying apparatus using the holding sealing material in this embodiment can be configured in such a manner that the first inorganic fiber sheet having impact absorption can be in contact with the metal casing and the water-proof insulation sheet is not in direct contact with the metal casing. In the electrically heating exhaust gas purifying apparatus having such a configuration, even if impact such as vibration is applied to the metal casing from the outside, the water-proof insulation sheet is hardly broken. Further, the electrically heating exhaust gas purifying apparatus is also configured in such a manner that the second inorganic fiber sheet excellent in heat resistance can be in contact with the exhaust gas-treating body and the water-proof insulation sheet is not in direct contact with the exhaust gas-treating body. In the electrically heating exhaust gas purifying apparatus having such a configuration, even if the exhaust gas-treating body is heated to high temperature by exhaust gas flow, melting loss of the water-proof insulation sheet is hardly caused.
In contrast, in a holding sealing material having a water-proof insulation sheet in at least one main surface, when the water-proof insulation sheet is used while being brought into contact with the metal casing, the water-proof insulation sheet tends to be easily broken by application of impact such as vibration to the metal casing from the outside.
If the water-proof insulation sheet is used while being brought into contact with the exhaust gas-treating body, since the exhaust gas-treating body is heated to high temperature by exhaust gas flow, melting loss of the water-proof insulation sheet is easily caused.
(6) In the holding sealing material in this embodiment, if the first inorganic fiber sheet, the water-proof insulation sheet, and the second inorganic fiber sheet are bonded by an inorganic adhesive, the respective sheets are hardly separated and in the production of the electrically heating exhaust gas purifying apparatus, the holding sealing material becomes excellent in handling properties.

(7) In the holding sealing material in this embodiment, if the inorganic fibers constituting the first inorganic fiber sheet and the second inorganic fiber sheet are at least one kind of inorganic fibers selected from the group consisting of alumina fibers, alumina-silica fibers, silica fibers, biosoluble fibers, and glass fibers, the holding sealing material is provided with excellent heat resistance and holding force.
   In the case where the inorganic fibers are biosoluble fibers, even if the biosoluble fibers are scattered and taken in a living body at the time of handling the holding sealing material, the biosoluble fibers are dissolved and discharged from the body and thus excellent in safety for the human body.

(8) In the case where the holding sealing material in this embodiment contains an organic binder, at the time of use of the electrically heating exhaust gas purifying apparatus, the organic binder is decomposed by the heat of high temperature exhaust gas and the inorganic fibers are released from adhesion and the holding sealing material is expanded. Since the holding sealing material expanded in the exhaust gas purifying apparatus has high repulsive force, the holding sealing material can exhibit a high holding force.

(9) Since the electrically heating exhaust gas purifying apparatus in this embodiment uses the holding sealing material in this embodiment, the exhaust gas purifying apparatus hardly causes an electric leakage and is provided with high safety.

(10) In the electrically heating exhaust gas purifying apparatus in this embodiment, the exhaust gas-treating body can be rapidly heated by applying electricity via the first electrode and the second electrode.
Consequently, the temperature of the exhaust gas-treating body can be rapidly raised to the catalyst activation temperature and therefore, even if the exhaust gas temperature is in a low state immediately after starting of an engine, the catalyst is activated and harmful gas or the like can be efficiently converted.

### EXAMPLES

### (Example 1)

A holding sealing material of Example 1 was produced through the following steps (1) to (4).

### (1) First inorganic fiber sheet production step

### (1-1) Fiber spinning step

Silica sol was added to an aqueous basic aluminum chloride solution, which was adjusted so as to control the Al content to be 70 g/l and the atomic ratio of Al and Cl to be Al : Cl = 1 : 1.8 (atomic ratio), in such a manner that the composition ratio in the inorganic fibers after firing became Al₂O₃ : SiO₂ = 72 : 28 (weight ratio), and further a proper amount of an organic polymer (polyvinyl alcohol) was added thereto to prepare a mixed solution.
The obtained mixed solution was concentrated and used as a mixture for spinning fibers and the mixture for spinning fibers was subjected to fiber spinning by a blowing method to produce inorganic fiber precursors.

### (1-2) Compression step

The inorganic fiber precursors obtained in the step (1-1) were compressed by a cross layer method to produce a continuous long sheet in a prescribed size.

### (1-3) Cutting step

Next, the long sheet was cut in a prescribed size to produce a first precursor sheet.

### (1-4) Firing step

Successively, the first precursor sheet was fired at a highest temperature of 1250°C to produce a first inorganic fiber sheet.
The produced first inorganic fiber sheet had a rectangular shape in a plane view, a size of length 150 cm × width 150 cm × thickness 6.3 mm, and a weight per unit area of 1400 g/m².

### (2) Second inorganic fiber sheet production step

A second inorganic fiber sheet having approximately the same configuration as that of the first inorganic fiber sheet was produced through similar steps of the steps (1-1) to (1-4) in the first inorganic fiber sheet production step (1).
The produced second inorganic fiber sheet had a rectangular shape in the plane view, a size of length 150 cm × width 150 cm × thickness 6.3 mm, and a weight per unit area of 1400 g/m².

### (3) Layering step

Separately, a mica sheet (D581a, produced by Okabe Mica Co., Ltd.) obtained by bonding soft agglomerated mica with silicone was prepared. The mica sheet had approximately a rectangular shape in a plane view, a size of length 150 cm × width 150 cm × thickness 0.4 mm, a density of 2.04 × 10³ kg/m, and a bending strength of 186 MPa. The coefficient of water absorption was 0.28% and the volume resistivity at normal temperature was 5 × 10⁹ nm, and the volume resistivity after heating at 550°C for 1 hour was 7 × 10⁷ Ω m.
The first inorganic fiber sheet, the mica sheet, and the second inorganic fiber sheet were layered in this order and these sheets were bonded through an inorganic adhesive to produce a layered sheet.
As the inorganic adhesive, silicone was used.

### (4) Molding and cutting step

A holding sealing material was produced by cutting the holding sealing material into a prescribed shape by using a punching apparatus.
At this time, the cutting was carried out in such a manner that a projected portion was formed in a part of a first short side surface and a recessed portion with a shape to be fitted with the projected portion was formed in a part of a second short side surface among end surfaces of the holding sealing material.
The produced holding sealing material had a size of length (L) 350 mm × width (W) 80 mm × thickness (T) 9 mm, a weight per unit area of 0.15 g/m², and a density of 1400 g/cm³.
A projected portion in a size of width 30 mm × length 35 mm was formed in the part of a first short side surface and a recessed portion with a shape to be fitted with the projected portion was formed in the part of a second short side surface.
The thickness of the first inorganic fiber sheet was 9 mm, the thickness of the second inorganic fiber sheet was 9 mm, and the thickness of the mica sheet was 0.5 mm and the ratio of the thickness of the first inorganic fiber sheet, the thickness of the mica sheet, and the thickness of the second inorganic fiber sheet and was 9 : 0.5 : 9.

### (Comparative Example 1)

In Comparative Example 1, a holding sealing material was produced in the same manner as Example 1, except that a material same as that of the first inorganic fiber sheet used in the step (1) of Example 1 and having a thickness of 18.5 mm was solely subjected to the molding and cutting step to produce a holding sealing material and neither the water-proof insulation sheet nor the second inorganic fiber sheet was used.

An insulation resistance measurement test was carried out for the holding sealing materials produced in Example 1 and Comparative Example 1.

### (Insulation resistance measurement test)

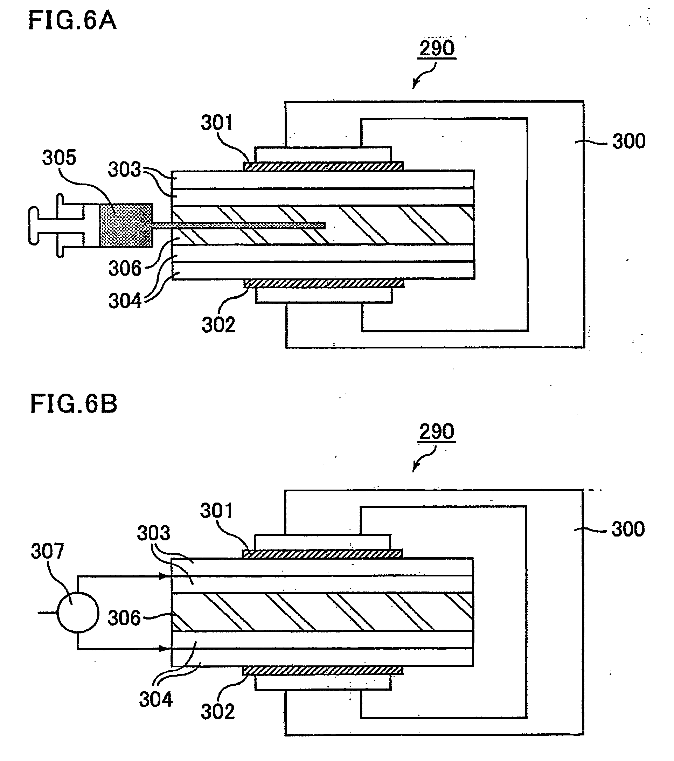

The insulation resistance measurement test was carried out using an insulation resistance measurement tester shown in Figs. 6A and 6B.

Fig. 6A is a side surface view schematically showing a tester for measuring insulation resistance and is a perspective view schematically showing the state where a sample for measurement is impregnated with water, and Fig. 6B is a perspective view schematically showing the state where the insulation resistance is measured by a conduction tester.

An insulation resistance measurement tester 290 shown in Figs. 6A and 6B is configured by a vice 300, an insulating upper plate 301 attached to the upper end of the vice 300, an insulating lower plate 302 attached to the lower end of the vice 300, two upper plates 303 made of a stainless steel (SUS) attached on the insulating upper plate 301, and two lower plates 304 made of SUS facing the upper plates 303 made of SUS and attached on the insulating lower plate 302.
The insulation resistance measurement was carried out as follows, using the insulation resistance measurement tester 290.

First, each produced holding sealing material was punched into a plane view size of 40 mm × 40 mm to give a sample 306 for insulation resistance measurement.
The sample 306 for measurement was sandwiched between the upper plates 303 made of SUS and the lower plates 304 made of SUS and fastened by the vice 300 so that the sample 306 for measurement had a thickness of 5 mm.

Next, as shown in Fig. 6A, a prescribed amount of water simulating condensed water was injected into the inside of the sample 306 for measurement, using a syringe 305.

After 5 minutes, as shown in Fig. 6B, the insulation resistance between the upper plates 303 made of SUS and the lower plates 304 made of SUS was measured in a measurement mode of 500 V and at minute electric current, using a conduction tester (R 8340, produced by ADVANTEST Corporation) 307.
This measurement was carried out 5 times for each amount of water while the amount of water (content of water) injected into each sample for measurement was changed to 0.3 ml, 2,7 ml, and 5.4 ml (immediately before dripping water), and the average value thereof was measured.
The insulation resistance was also measured in the case where no water was injected to the sample for measurement and the measurement was carried out 5 times and the average value thereof was measured.

Table 1 shows the configurations of the holding sealing materials produced in Example 1 and Comparative Example 1 and the results (average values for 5 times measurement) of the insulation resistance measurement test.

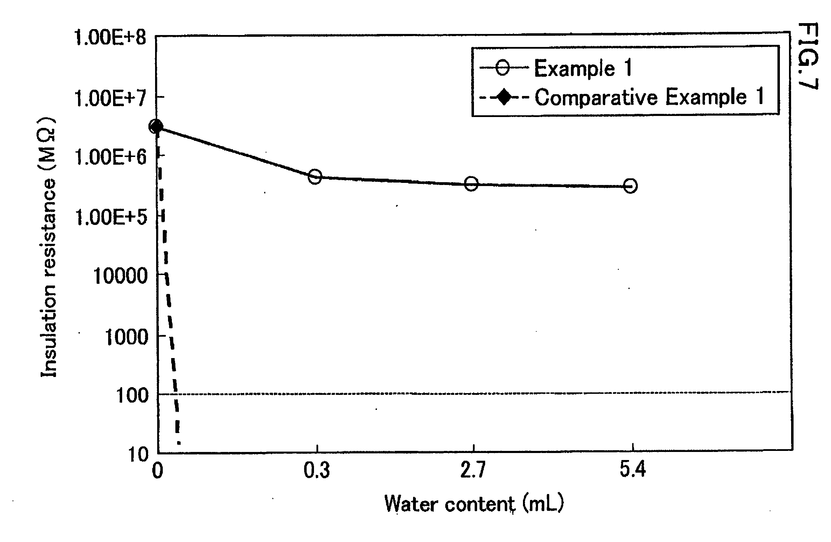

Fig. 7 shows a graph showing measurement results (average values for 5 times measurement) of the insulation resistance test for each holding sealing material produced in Example 1 and Comparative Example 1.

**Table 1**

| | Mica sheet | Water content (Note 1) | | | |
|---|---|---|---|---|---|
| | | 0mL | 0.3mL | 2.7mL | 5.4mL |
| Example 1 | Included | 3.07× 10⁶ MΩ | 4.12× 10⁵ MΩ | 3.14× 10⁵ MΩ | 2.73× 10⁵ MΩ |
| Comparative Example 1 | Not included | 3.06× 10⁶ MΩ | 1.00× 10 MΩ or less | Not measured | Not measured |

| | | | | | |
|---|---|---|---|---|---|
| (Note 1) The insulation resistance is an average value of five-time measurements. | | | | | |

As shown in Table 1 and Fig. 7, the holding sealing material produced in Example 1 had an insulation resistance as high as 2.73 × 10⁵ MΩ, which considerably exceeded the value (100 MΩ) set as a standard value, even if the water content was increased to 5.4 ml.
The value (100 MΩ) set as a standard value is a value set as a sufficient resistance value for preventing occurrence of an electric leakage in the case where voltage commonly employed is applied in an electrically heating exhaust gas purifying apparatus.
On the other hand, in the case of the holding sealing material produced in Comparative Example 1, since no water-proof insulation sheet was used, the insulation resistance was considerably low, 1.00 × 10 MΩ or less, at the time when the water content was 0.3 ml and it was significantly below the standard value.
Accordingly, in the case where the holding sealing material produced in Comparative Example 1 was used in an electrically heating exhaust gas purifying apparatus, an electric leakage is probably supposed to occur.

### (Second Embodiment)

Next, a second embodiment, one embodiment of the present invention, will be described with reference to drawings.
The configuration of the holding sealing material in this embodiment is the same as that of the holding sealing material in the first embodiment of the present invention as described above, except that the holding sealing material has a bilayer structure formed by layering one inorganic fiber sheet and one water-proof insulation sheet and therefore, description of duplicated matter will not be given.
The configuration of the electrically heating exhaust gas purifying apparatus in this embodiment is the same as that of the electrically heating exhaust gas purifying apparatus in the first embodiment of the present invention as described above, except that the holding sealing material in this embodiment is used and therefore, description of duplicated matter will not be given.

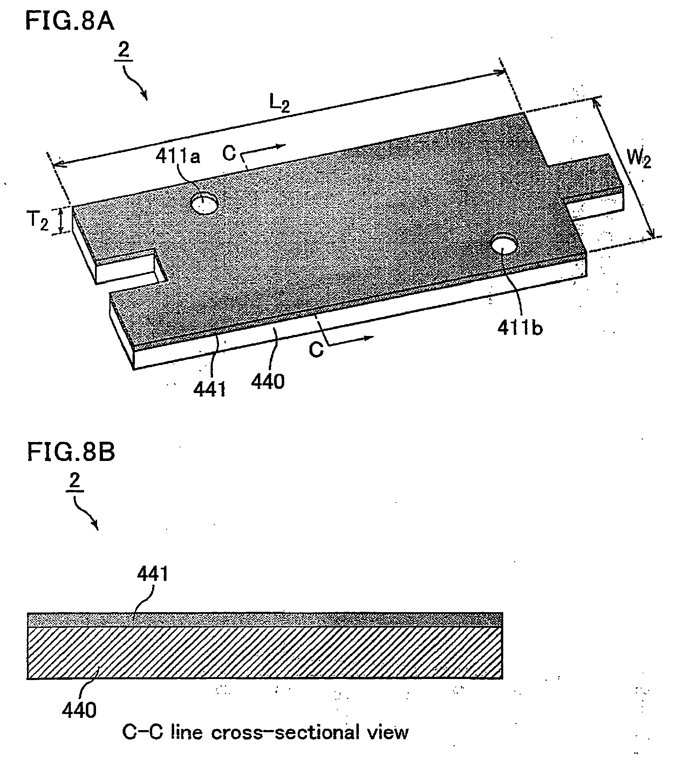

Fig. 8A is a perspective view schematically showing a holding sealing material in a second embodiment of the present invention, and Fig. 8B is a C-C line cross-sectional view of the holding sealing material in the second embodiment of the present invention shown in Fig. 8A.

The holding sealing material 2 in this embodiment as shown in Figs. 8A and 8B has a rectangular shape in a plane view with a prescribed length (shown with the double arrow L₂ in Fig. 8A), width (shown with the double arrow W₂ in Fig. 8A), and thickness (shown with the double arrow T₂ in Fig. 8A).

The holding sealing material 2 in the second embodiment of the present invention includes an inorganic fiber sheet 440 in which inorganic fibers are interlaced with one another and a water-proof insulation sheet 441, and the inorganic fiber sheet 440 and the water-proof insulation sheet 441 are layered.
The water-proof insulation sheet 441 covers the entire surface of one main surface of the inorganic fiber sheet 440.
Through hole parts 411a and 411b are provided in the holding sealing material 2 for inserting electrodes.
In the case where the holding sealing material 2 in this embodiment is used in an electrically heating exhaust gas purifying apparatus, the inorganic fiber sheet 440 side of the holding sealing material 2 may be arranged in the metal casing side or the water-proof insulation sheet 441 may be arranged in the metal casing side.

The ratio of the thickness of the inorganic fiber sheet 440 and the water-proof insulation sheet 441 is desirably 1: 1 to 10000 : 1.

Inorganic fibers are interlaced with one another in the inorganic fiber sheet 440.
The type of the inorganic fibers is the same as the type of the inorganic fibers constituting the first inorganic fiber sheet 40a and the second inorganic fiber sheet 40b described in the first embodiment.
The other configurations of the inorganic fiber sheet 440 are approximately the same as those of the first inorganic fiber sheet 40a and the second inorganic fiber sheet 40b described in the first embodiment of the present invention and therefore, the description will not be given.

The configuration of the water-proof insulation sheet 441 is approximately the same as that of the water-proof insulation sheet 41 described in the first embodiment of the present invention and therefore, the description will not be given.

Next, a method for producing the holding sealing material in this embodiment will be described.
The method for producing the holding sealing material in this embodiment is the same as that for producing the holding sealing material in the first embodiment of the present invention as described above, except that no second inorganic fiber sheet is used.
That is, a first inorganic fiber sheet is produced through the same step as that in the first inorganic fiber sheet production step (1) in the method for producing the holding sealing material in the first embodiment of the present invention; the first inorganic fiber sheet and a water-proof insulation sheet are layered through the same step as that in the layering step (3) to produce a layered sheet: and the layered sheet is cut into a prescribed shape through the same step as that in the molding and cutting step (4) to produce a holding sealing material.
Additionally, an organic binder application step (5) may be carried out if necessary to apply an organic binder to the produced holding sealing material and thus a holding sealing material to which the organic binder is applied can be produced.

A method for producing the electrically heating exhaust gas purifying apparatus in this embodiment is the same as that for producing the electrically heating exhaust gas purifying apparatus in the first embodiment of the present invention as described above, except that the holding sealing material in this embodiment is used.
That is, the electrically heating exhaust gas purifying apparatus in this embodiment can be produced by using the holding sealing material in this embodiment through the stuffing step (1) and the electrode attachment step (2) in the first embodiment of the present invention.
In the stuffing step, the holding sealing material may be wound onto an exhaust gas-treating body while the inorganic fiber sheet side of the holding sealing material is set in the outside (metal casing side) or the holding sealing material may be wound onto an exhaust gas-treating body while the inorganic fiber sheet side of the holding sealing material is set in the inside (exhaust gas-treating body side).

The effects (1) to (4) and the effects (6) to (10) described in the first embodiment of the present invention can be also exerted in the holding sealing material and the electrically heating exhaust gas purifying apparatus in the second embodiment of the present invention.

### (Other Embodiments)

The holding sealing material of the present invention may further contain an expanding material.
Specifically, the inorganic fiber sheet constituting the holding sealing material of the present invention may contain an expanding material.
In the holding sealing material containing an expanding material, the expanding material is expanded by the heat of high temperature exhaust gas at the time of use of an electrically heating exhaust gas purifying apparatus. Since the holding sealing material expanded in the exhaust gas purifying apparatus has high repulsive force, the holding sealing material can exhibit high holding force.
Examples of the expanding material include expansive vermiculite, bentonite, and expansive graphite.

The holding sealing material of the present invention may be sufficient if it contains at least one inorganic fiber sheet and at least one water-proof insulation sheet and may contain a plurality of inorganic fiber sheets and a plurality of water-proof insulation sheets.
Specifically, the holding sealing material may be a holding sealing material including a plurality of inorganic fiber sheets and a plurality of water-proof insulation sheets and being obtained by alternately layering an inorganic fiber sheet and a water-proof insulation sheet.
Examples of the holding sealing material include a holding sealing material having a five-layer structure constituted by layering a first inorganic fiber sheet, a first water-proof insulation sheet, a second inorganic fiber sheet, a second water-proof insulation sheet, and a third inorganic fiber sheet in this order.
In this case, the respective inorganic fiber sheets and water-proof insulation sheets of the holding sealing material may be bonded to one another by an inorganic adhesive.
Each of the plurality of inorganic fiber sheets of the holding sealing material may include the same inorganic fibers or may include different inorganic fibers.
For example, in the case of the holding sealing material having a five-layer structure, the first inorganic fiber sheet and the second inorganic fiber sheet may include alumina-silica fibers, and the third inorganic fiber sheet may include silica fibers. Since the inorganic fiber sheet including alumina-silica fibers is excellent in heat resistance and the inorganic fiber sheet including silica fibers is excellent in holding force, a holding sealing material can be provided with both advantageous properties.
In the electrically heating exhaust gas purifying apparatus using the holding sealing material, the first inorganic fiber sheet including alumina-silica fibers, which is more excellent in heat resistance, is desirable to be arranged in the exhaust gas-treating body side.

The inorganic fiber sheet constituting the holding sealing material of the present invention may be a needling sheet subjected to a needling treatment.
The needling treatment is treatment of inserting in and pulling out fiber interlacing means such as needles or the like for an inorganic fiber sheet or a first precursor sheet.
In the inorganic fiber sheet subjected to the needling treatment, inorganic fibers with a relatively long average fiber length are more densely interlaced with one another and therefore, the bulk (volume) of the inorganic fiber sheet is properly lowered and a proper repulsive force can be obtained.

The holding sealing material of the present invention includes an inorganic fiber sheet in which inorganic fibers are interlaced with one another and a water-proof insulation sheet containing a flaky inorganic material as indispensable constituents, and desired effects can be caused by properly combining various kinds of constitutions described in the first embodiment, the second embodiment, and other embodiments of the present invention (e.g., composition of the inorganic fibers, fiber length of the inorganic fiber, and composition of the water-proof insulation sheet, etc.) with the indispensable constituents.

### EXPLANATION OF SYMBOLS

- Holding sealing material: 1, 2
- Inorganic fiber sheet: 40, 440
- Water-proof insulation sheet: 41, 441

## Claims

1. An electrically heating exhaust gas purifying apparatus (160) comprising:
an exhaust gas-treating body (140) made of a resistance heating body;
a metal casing (150) for housing the exhaust gas-treating body (140); and
a holding sealing material (1) arranged between the exhaust gas-treating body (140) and the metal casing (150) to hold the exhaust gas-treating body (140), wherein the exhaust gas purifying apparatus (160) further comprises:
a first electrode (151) penetrating through the metal casing (150) and the holding sealing material (1) and having a first end part (151a) bonded to the exhaust gas-treating body (140) and a second end part (151b) exposed outside of the metal casing, and
a second electrode (152) penetrating through the metal casing (150) and the holding sealing material (1) and having a first end part (152a) bonded to the exhaust gas-treating body (140) and a second end part (152b) exposed outside of the metal casing (150),
**characterized in that**
the holding sealing material (1) comprises:
an inorganic fiber sheet (40) in which inorganic fibers are interlaced with one another, and
a water-proof insulation sheet (41) containing a flaky inorganic material.

2. The electrically heating exhaust gas purifying apparatus (160) according to claim 1,
wherein the flaky inorganic material is one or more kinds of materials selected from the group consisting of mica, vermiculite, montmorillonite, iron-montmorillonite, beidellite, saponite, hectorite, stevensite, nontronite, magadiite, ilerite, kanemite, smectite, and layered titanate.

3. The electrically heating exhaust gas purifying apparatus (160) according to claim 2,
wherein the flaky inorganic material is mica.

4. The electrically heating exhaust gas purifying apparatus (160) according to any one of claims 1 to 3,
wherein the water-proof insulation sheet (41) comprises an adhesive.

5. The electrically heating exhaust gas purifying apparatus (160) according to claim 4,
wherein the adhesive includes one or more kinds of materials selected from the group consisting of silicones, polyethylene glycols, polyalkylene glycols, phosphoric acid esters, alkylbenzene, poly-α-olefins, polyol esters, alkylnaphthalene, halocarbons, polyallyl alkanes, polyphenyls, silicic acid esters, and polyphenyl ethers.

6. The electrically heating exhaust gas purifying apparatus (160) according to claim 5,
wherein the adhesive is silicone.

7. The electrically heating exhaust gas purifying apparatus (160) according to any one of claims 1 to 6,
wherein the inorganic fiber sheet (40) comprises a first inorganic fiber sheet (40a) and a second inorganic fiber sheet (40b) and the water-proof insulation sheet (41) is sandwiched between the first inorganic fiber sheet (40a) and the second inorganic fiber sheet (40b).

8. The electrically heating exhaust gas purifying apparatus (160) according to any one of claims 1 to 7,
wherein the inorganic fiber sheet (40) and the water-proof insulation sheet (41) are bonded by an inorganic adhesive.

9. The electrically heating exhaust gas purifying apparatus (160) according to any one of claims 1 to 8,
wherein the inorganic fibers are at least one kind of inorganic fibers selected from the group consisting of alumina fibers, alumina-silica fibers, silica fibers, biosoluble fibers, and glass fibers.

10. The electrically heating exhaust gas purifying apparatus (160) according to any one of claims 1 to 9,
wherein the holding sealing material (1) further comprises an organic binder.

11. The electrically heating exhaust gas purifying apparatus (160) according to any one of claims 1 to 10,
wherein the holding sealing material (1) further comprises an expanding material.

## Patentansprüche

1. Elektrisch beheizbare Abgasreinigungsvorrichtung (16=) mit:
einem Abgasbehandlungskörper (140), der aus einem Widerstandsheizkörper ausgebildet ist;
einem Metallgehäuse (150) zum Aufnehmen des Abgasbehandlungskörpers (140); und
einem Halteabdichtmaterial (1), das zwischen dem Abgasbehandlungskörper (140) und dem Metallgehäuse (150) angeordnet ist, zum Halten des Abgasbehandlungskörpers (140), wobei die Abgasreinigungsvorrichtung (160) ferner aufweist:
eine erste Elektrode (151), die das Metallgehäuse (150) und das Halteabdichtmaterial (1) durchdringt und einen ersten Endteil (151a), der mit dem Abgasbehandlungskörper (140) verbunden ist, und einen zweiten Endteil (151b) aufweist, der außerhalb des Metallgehäuses freiliegt, und
eine zweite Elektrode (152), die das Metallgehäuse (150) und das Halteabdichtmaterial (1) durchdringt und einen ersten Endteil (152a), der mit dem Abgasbehandlungskörper (140) verbunden ist, und einen zweiten Endteil (152b) aufweist, der außerhalb des Metallgehäuses (150) freiliegt,
**dadurch gekennzeichnet, dass**
das Halteabdichtmaterial (1) aufweist:
eine anorganische Faserschicht (40), in der anorganische Fasern miteinander verflochten sind, und
eine wasserdichte Isolierungsschicht (41), die ein flockiges anorganisches Material aufweist.

2. Elektrisch beheizbare Abgasreinigungsvorrichtung (160) nach Anspruch 1,
wobei das flockige anorganische Material einer oder mehrere Materialtypen ist, die aus der Gruppe ausgewählt sind, die besteht aus Glimmern, Vermikuliten, Montmorilloniten, Eisen-Montmorilloniten, Beidelliten, Saponiten, Hektoriten, Stevensiten, Nontroniten, Magadiiten, Ileriten, Kanemiten, Smektiten, und geschichteten Titanaten.

3. Elektrisch beheizbare Abgasreinigungsvorrichtung (160) nach Anspruch 2,
wobei das flockige anorganische Material Glimmer ist.

4. Elektrisch beheizbare Abgasreinigungsvorrichtung (160) nach einem der Ansprüche 1 bis 3,
wobei die wasserdichte Isolierungsschicht (41) ein Haftmittel aufweist.

5. Elektrisch beheizbare Abgasreinigungsvorrichtung (160) nach Anspruch 4,
wobei das Haftmittel einen oder mehrere Materialtypen aufweist, die ausgewählt sind aus der Gruppe, die besteht aus Silkonen, Polyethylen-Glykolen, Polyalkylen-Glykolen, Phosphorsäureestern, Alkylbenzenen bzw. Alkylbenzolen, Poly-α-Olefinen, Polyolester, Alkylnaphtalenen, Halogenkohlenwasserstoffen, Polyallylalkanen, Polyphenylenen, Kieselsäureestern, und Polyphenylethern.

6. Elektrisch beheizbare Abgasreinigungsvorrichtung (160) nach Anspruch 5,
wobei das Haftmittel Silikon ist.

7. Elektrisch beheizbare Abgasreinigungsvorrichtung (160) nach einem der Ansprüche 1 bis 6,
wobei die anorganische Faserschicht (40) eine erste anorganische Faserschicht (40a) und eine zweite anorganische Faserschicht (40b) aufweist, und die wasserdichte Isolierungsschicht (41) zwischen der ersten anorganischen Faserschicht (40a) und der zweiten anorganischen Faserschicht (40b) eingeschoben ist.

8. Elektrisch beheizbare Abgasreinigungsvorrichtung (160) nach einem der Ansprüche 1 bis 7,
wobei die anorganische Faserschicht (40) und die wasserdichte Isolierungsschicht (41) durch ein anorganisches Haftmittel verbunden sind.

9. Elektrisch beheizbare Abgasreinigungsvorrichtung (160) nach einem der Ansprüche 1 bis 8,
wobei die anorganischen Fasern zumindest ein Typ an anorganischen Fasern sind, die ausgewählt sind aus der Gruppe, die besteht aus Aluminiumoxidfasern, Aluminiumoxid-Siliziumdioxidfasern, Siliziumdioxidfasern, biolöslichen Fasern und Glasfasern.

10. Elektrisch beheizbare Abgasreinigungsvorrichtung (160) nach einem der Ansprüche 1 bis 9,
wobei das Halteabdichtmaterial (1) ferner ein anorganisches Bindemittel aufweist.

11. Elektrisch beheizbare Abgasreinigungsvorrichtung (160) nach einem der Ansprüche 1 bis 10,
wobei das Halteabdichtmaterial (1) ferner ein Dehnmaterial aufweist.

## Revendications

1. Appareil de purification de gaz d'échappement à chauffage électrique (160) comprenant :
un corps de traitement de gaz d'échappement (140) constitué d'un corps de chauffage par résistance ;
un boîtier métallique (150) pour recevoir le corps de traitement de gaz d'échappement (140) ; et
un matériau de maintien et d'étanchéité (1) agencé entre le corps de traitement de gaz d'échappement (140) et le boîtier métallique (150) pour maintenir le corps de traitement de gaz d'échappement (140) ; où l'appareil de purification de gaz d'échappement (160) comprend en outre :
une première électrode (151) pénétrant à travers le boîtier métallique (150) et le matériau de maintien et d'étanchéité (1) et ayant une première partie d'extrémité (151a) liée au corps de traitement de gaz d'échappement (140) et une deuxième partie d'extrémité (151b) exposée à l'extérieur du boîtier métallique, et
une deuxième électrode (152) pénétrant à travers le boîtier métallique (150) et le matériau de maintien et d'étanchéité (1) et ayant une première partie d'extrémité (152a) liée au corps de traitement de gaz d'échappement (140) et une deuxième partie d'extrémité (152b) exposée à l'extérieur du boîtier métallique (150),
**caractérisé en ce que**
le matériau de maintien et d'étanchéité (1) comprend :
une feuille en fibres inorganiques (40) dans laquelle des fibres inorganiques sont entrelacées entre elles, et
une feuille d'isolation étanche à l'eau (41) contenant un matériau inorganique en paillettes.

2. Appareil de purification de gaz d'échappement à chauffage électrique (160) selon la revendication 1,
dans lequel le matériau inorganique en paillettes est un ou plusieurs type(s) de matériaux choisis dans le groupe constitué de mica, de vermiculite, de montmorillonite, de montmorillonite ferrifère, de beidellite, de saponite, d'hectorite, de stevensite, de nontronite, de magadiite, d'ilérite, de kanemite, de smectite, et de titanate en couches.

3. Appareil de purification de gaz d'échappement à chauffage électrique (160) selon la revendication 2,
dans lequel le matériau inorganique en paillettes est du mica.

4. Appareil de purification de gaz d'échappement à chauffage électrique (160) selon l'une quelconque des revendications 1 à 3,
dans lequel la feuille d'isolation étanche à l'eau (41) comprend un adhésif.

5. Appareil de purification de gaz d'échappement à chauffage électrique (160) selon la revendication 4,
dans lequel l'adhésif comporte un ou plusieurs type(s) de matériaux choisis dans le groupe constitué de silicones, de polyéthylène glycols, de polyalkylène glycols, d'esters d'acide phosphorique, d'alkylbenzène, de poly-α-oléfines, d'esters de polyol, d'alkylnaphtalène, d'hydrocarbures halogénés, d'alcanes de polyallyle, de polyphényles, d'esters d'acide silicique, et d'éthers de polyphényle.

6. Appareil de purification de gaz d'échappement à chauffage électrique (160) selon la revendication 5,
dans lequel l'adhésif est de la silicone.

7. Appareil de purification de gaz d'échappement à chauffage électrique (160) selon l'une quelconque des revendications 1 à 6,
dans lequel la feuille en fibres inorganiques (40) comprend une première feuille en fibres inorganiques (40a) et une deuxième feuille en fibres inorganiques (40b) et la feuille d'isolation étanche à l'eau (41) est prise en tenaille entre la première feuille en fibres inorganiques (40a) et la deuxième feuille en fibres inorganiques (40b).

8. Appareil de purification de gaz d'échappement à chauffage électrique (160) selon l'une quelconque des revendications 1 à 7,
dans lequel la feuille en fibres inorganiques (40) et la feuille d'isolation étanche à l'eau (41) sont liées par un adhésif inorganique.

9. Appareil de purification de gaz d'échappement à chauffage électrique (160) selon l'une quelconque des revendications 1 à 8,
dans lequel les fibres inorganiques sont au moins un type de fibres inorganiques choisies dans le groupe constitué de fibres d'alumine, de fibres d'alumine-silice, de fibres de silice, de fibres biosolubles, et de fibres de verre.

10. Appareil de purification de gaz d'échappement à chauffage électrique (160) selon l'une quelconque des revendications 1 à 9,
dans lequel le matériau de maintien et d'étanchéité (1) comprend en outre un liant organique.

11. Appareil de purification de gaz d'échappement à chauffage électrique (160) selon l'une quelconque des revendications 1 à 10,
dans lequel le matériau de maintien et d'étanchéité (1) comprend en outre un matériau d'expansion.
